(19) Europäisches Patentamt
European Patent Office
Office européen des brevets

(11) **EP 4 775 442 A1**

(12) **EUROPEAN PATENT APPLICATION**
published in accordance with Art. 153(4) EPC

(43) Date of publication:
**15.07.2026 Bulletin 2026/29**

(21) Application number: **24862736.6**

(22) Date of filing: **30.08.2024**

(51) International Patent Classification (IPC):
**B60L 58/16** (2019.01)   **B60L 3/00** (2019.01)
**B60L 50/60** (2019.01)   **B60L 58/18** (2019.01)
**H01M 10/42** (2006.01)   **H02J 7/00** (2026.01)

(52) Cooperative Patent Classification (CPC):
**B60L 3/00; B60L 50/60; B60L 58/16; B60L 58/18; H01M 10/42; H02J 7/00**

(86) International application number:
**PCT/JP2024/031301**

(87) International publication number:
**WO 2025/053084 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146463**

(71) Applicant: **Hitachi, Ltd.**
**Tokyo 100-8280 (JP)**

(72) Inventors:
• **SHIMADA, Motomi**
  **Tokyo 100-8280 (JP)**
• **NAKATA, Kiyoshi**
  **Tokyo 100-8280 (JP)**
• **KANEKO, Takashi**
  **Tokyo 100-8280 (JP)**
• **HATA, Kunihiko**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **MANAGEMENT DEVICE FOR RAILWAY STORAGE BATTERY, MANAGEMENT METHOD FOR RAILWAY STORAGE BATTERY, AND MANAGEMENT SYSTEM FOR RAILWAY STORAGE BATTERY**

(57)    The purpose of the present invention is to improve the aging performance of a plurality of storage battery unit elements by converging variations in age deterioration of the plurality of storage battery unit elements mounted on a railway vehicle. One representative of the present invention is a management device for a railway storage battery, which manages a plurality of storage battery unit elements exchangeably mounted on a railway vehicle, the management device comprising: an in-operation storage battery information acquisition means for acquiring information about the deterioration levels of the plurality of storage battery unit elements mounted on the railway vehicle in operation; an in-storage storage battery information acquisition means for acquiring information about the deterioration levels of a plurality of storage battery unit elements stored outside the railway vehicle; and a storage battery management information display means for displaying information about the deterioration levels of the plurality of storage battery unit elements in operation and in storage.

FIG. 2

## Description

Technical Field

This invention relates to a management device for a railway storage battery, a management method for the railway storage battery, and a management system for the railway storage battery.

Background Art

Recently, a battery powered electric railcar (BEMU: Battery electric multiple unit) has been adopted as the railway vehicle, which is powered by a storage battery formed by combining storage battery modules each comprised of a Li-ion battery and the like. The power storage operation of the storage battery involves a chemical reaction. The repeated power storage operations may cause aging deterioration in the storage battery module.

Patent Literature 1 discloses the remote monitoring system for the storage battery mounted on the railway vehicle. The terrestrial server for the remote monitoring system includes the data storage unit that stores operation history data of the storage battery, which have been received from a plurality of storage battery systems, the operation history data analysis unit that analyzes the operation history data stored in the data storage unit, and calculates parameters required for predicting deterioration in the storage battery, and the service life prediction unit that predicts each service life of the storage batteries of the respective storage battery systems using the parameters calculated by the operation history data analysis unit and the operation history data received from the respective storage battery systems.

Patent Literature 2 discloses the power control device including a plurality of secondary batteries that are connected to the electrical equipment, and have the respective charging/discharging states independently controlled, and the fuel cells that are connected to the plurality of secondary batteries to be charged, respectively. The power control device includes the control unit that sets the secondary battery to be discharged as the discharging object, and the secondary battery to be charged as the charging object, which are selected from the plurality of secondary batteries, and controls the discharging state from the discharging object to the electrical equipment, and the charging state from the fuel cell to the charging object. The power control device further includes the electrical output control unit for controlling to increase or decrease the electrical output of the fuel cell to the charging object, based on the decline rate of the charging rate of the discharging object.

Citation List

Patent Literature

Patent Literature 1: WO2022/181680
Patent Literature 2: Japanese Unexamined Patent Application Publication No. 2014-79064

Summary of Invention

Technical Problem

As a result of intensive studies on improvement in aging of the storage battery mounted on the railway vehicle, the inventors of the present invention have gained insight as below.

A huge storage battery capacity is required for operating the battery powered electric railcar on the predetermined route. For this reason, the battery powered electric railcar has a huge number of storage battery cells mounted thereon in comparison with the electric automobile. For example, a storage battery system for driving a traction motor is configured to have several hundreds of storage battery cells connected in series for generating voltage of approximately 1500 V, and further have several storage battery cells connected in parallel for generating current of appropriately 300 A. That is, the storage battery system for driving the traction motor includes, for example, several thousands of storage battery cells. Generally, a plurality of the above-described storage battery systems are mounted on a set of battery powered electric railcar including a plurality of vehicles.

Each aging performance of a huge number of storage battery cells mounted on the battery powered electric railcar differs from one another. Variation in quality upon production of the storage battery cells, and variation in the use environment/usage of the storage battery cells deteriorate each aging performance of the respective storage battery cells, resulting in performance inconsistency.

If one of the storage battery cells has its aging performance deteriorated (typically, an internal resistance of the storage battery cell is increased, and the voltage across both ends of the cell is increased in the flow of electric current), other series-connected storage battery cells have the respective performances deteriorated (typically, the flow of current through the storage battery cell that cannot withstand the use is reduced. As a result, the flow of current through the whole storage battery cells connected in series is reduced as well). If a certain group of the series-connected storage battery cells cannot withstand the use, the load is exerted on another group of series-connected storage battery cells, which is connected in parallel with the faulty group (typically, the flow of current through the series-connected group, including the storage battery cell that cannot withstand the use is reduced. As a result, the current flows dividedly through other series-connected groups, which are connected in parallel with the faulty series-connected group), thus accelerating the aging deterioration. As a result, the aging deterioration of the storage battery system progresses in a more accelerated manner. In other words, the aging performance of the storage battery system is influenced by the storage battery cell with the lowest aging performance among a huge number of storage battery cells contained in the storage battery system.

If one of the storage battery cells cannot withstand the use owing to aging deterioration (typically, the storage battery capacity is lowered to cause insufficiency in the charging amount for operation on the predetermined route), other series-connected storage battery cells cannot withstand the use (typically, the storage capacity of the storage battery cell that cannot withstand the use is significantly reduced. In order to avoid depletion of the storage capacity of the storage battery cell, the discharging current is prevented from flowing through the entire series-connected storage battery cells). If a group of the series-connected storage battery cells cannot withstand the use, the discharging current cannot flow through the entire series-connected storage battery cells which are connected parallel to the faulty group. That is, the aging performance (capacity deterioration) of the storage battery system is influenced by the storage battery cell with the lowest aging performance among a huge number of storage battery cells contained in the storage battery system.

Meanwhile, the battery powered electric railcar is operated on the predetermined route in accordance with the predetermined pattern. Compared with the electric automobile for totally different usages, the standard aging deterioration pattern of the storage battery system (storage battery cell) mounted on the battery powered electric railcar is predictable.

If the aging deterioration in all the storage battery systems used on the specific route can be converged to the standard aging deterioration pattern of the specific route, in other words, if the storage battery cell with the lowest aging performance among those contained in the storage battery system can be converged to the standard aging deterioration pattern, it is possible to use the storage battery system on the specific route for a prolonged time. In other words, it is ideally possible to use all the storage battery cells contained in the storage battery system to the limit of the aging performance. Even if all the storage battery cells cannot be converged to the standard aging deterioration pattern, the aging performance of the storage battery system can be improved to a practically sufficient level so long as the aging deterioration in units of the storage battery modules each comprised of the plurality of storage battery cells can be converged to the standard aging deterioration pattern.

An object of the present invention is to improve the aging performance of a plurality of storage battery unit elements by converging variations in the aging deterioration of those storage battery unit elements mounted on the railway vehicle.

Solution to Problem

In order to solve the above problems, a typical one of the present invention is a management device for a railway storage battery which manages a plurality of storage battery unit elements replaceably mounted on a railway vehicle, and includes: an in-operation storage battery information acquisition unit for acquiring information relating to deterioration levels of the plurality of storage battery unit elements mounted on the railway vehicle in operation; an in-storage storage battery information acquisition unit for acquiring information relating to deterioration levels of the plurality of storage battery unit elements stored outside the railway vehicle; and a storage battery management information display unit for displaying information relating to the deterioration levels of the plurality of storage battery unit elements in operation and in storage.

Preferably, the storage battery management information display unit displays the information relating to variation in the deterioration levels of the plurality of storage battery unit elements, the replacement plan of the plurality of storage battery unit elements to reduce the variation in the deterioration levels of the storage battery unit elements mounted on the specific railway vehicle, and the replacement proposal of the plurality of storage battery unit elements before one of those storage battery unit elements mounted on the specific railway vehicle reaches the predetermined deterioration level.

Advantageous Effects of Invention

The present invention allows appropriate replacement of the plurality of storage battery unit elements replaceably mounted on the specific railway vehicle and the plurality of storage battery unit elements stored outside the railway vehicle in operation to reduce variation in the deterioration level. The aging performance of the plurality of storage battery unit elements can be improved to secure constantly stable power storage performance, and prolonged service life. The respective operating rates of the plurality of storage battery unit elements are leveled out to allow efficient operation.

Brief Description of Drawings

Fig. 1 is a conceptual explanatory view of a circulation system of a storage battery.
Fig. 2 is a view of a storage battery data management unit for upcycling a storage battery system.
Fig. 3 is a block diagram illustrating a drive system configuration of a real vehicle in the state where the storage battery of the real vehicle is comprised of a plurality of storage battery systems.
Fig. 4 is a view of an internal configuration of the storage battery system.
Fig. 5(a) is a view of a controller configuration for data collection from the storage battery system, and Figs. 5(b) and 5(c) illustrate the required data as quality data of the storage battery.
Fig. 6 illustrates an example of an ID system that enables traceability.
Fig. 7 illustrates an example of an ID system that enables traceability.
Fig. 8 is a table of an ID address architecture of the ID system.
Fig. 9 is a step diagram indicating a maintenance and replacement process of the storage battery system.
Fig. 10 illustrates an outline of a method for replacing the storage battery unit according to a first embodiment.
Fig. 11 is a flowchart representing a maintenance and replacement process of the storage battery system.
Fig. 12 is a view explaining a process step of S102 of Fig. 11 in more detail.
Fig. 13 is a view explaining process steps of S119 and S120 of Fig. 11 in more detail.
Fig. 14 is a view illustrating a configuration of a model (simulation model) for simulating charging/discharging operations of the storage battery system.
Fig. 15A(a) and Fig. 15A(b) illustrate variation in a capacity maintenance rate (SOHq) of the storage battery module.
Fig. 15B illustrates variation in a capacity maintenance rate (SOHq) of the actually used storage battery module.
Fig. 16 is a view illustrating a determining method for ranking the storage battery module in accordance with the capacity maintenance rate (SOHq).
Fig. 17 represents storage battery information that is recorded when ranking the storage battery modules into three ranks of properties A, B, and C in S211 through prediction of performance deterioration of the storage battery module in operation by utilizing a digital twin in S204 of Fig. 12.
Fig. 18 represents storage battery information of the storage battery module in storage, which is recorded when making a recombination plan of the storage battery module after performing the recombination of the storage battery module on trial in S212 of Fig. 12.
Fig. 19 represents storage battery information for confirmation in S104 of Fig. 11 whether the storage battery module in storage is ready for replacement.
Fig. 20 represents storage battery information for confirmation of a position (arrangement) after replacement of the storage battery module in S110 of Fig. 11.
Fig. 21 is a view for comparing an arrangement of the storage battery modules between before and after the recombination of the storage battery modules.
Fig. 22 is a view illustrating a temperature distribution when using the storage battery modules.
Fig. 23(a) illustrates a method for determining ranking based on the temperature at which the storage battery module is used, and Fig. 23(b) illustrates real data of the temperature used for forming the graph of Fig. 23(a).
Fig. 24 is a view representing storage battery information of the storage battery module, which is managed using a storage battery data management unit.
Fig. 25 is a view representing an arrangement of the storage battery modules after recombination according to a second embodiment.

Description of Embodiments

Referring to the appended drawings, the following describes embodiments of the present invention in detail.

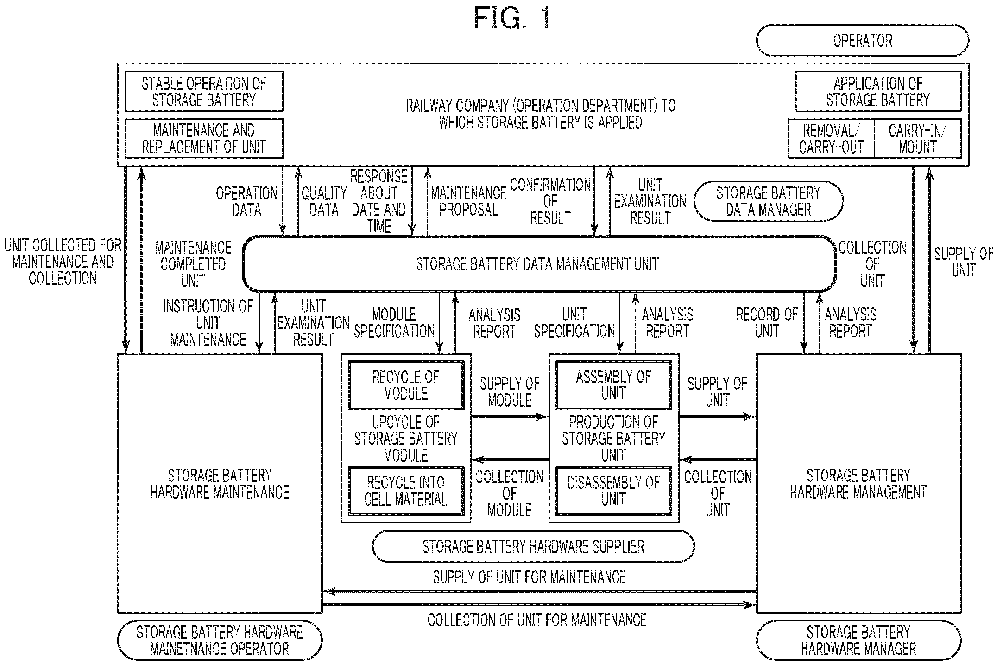

Fig. 1 is a conceptual explanatory view of a circulation system of a storage battery.
In this case, the storage battery is used by an operator. The operator is a railway company (operation department), and the storage battery to be used as a power source is mounted on the vehicle. In this case, the railway company (operation department) may be referred to as an object to which the storage battery is applied. The storage battery is subjected to maintenance and replacement in units of storage battery units each storing a plurality of storage battery modules. A plurality of storage battery units are stored in the storage battery system (storage battery box, box) so that each of the storage battery systems (storage battery box, box) is controlled. This will be described in detail later.
The storage battery unit is maintained by a storage battery hardware maintenance operator. Upon reception of a request from a storage battery hardware manager, the storage battery hardware maintenance operator performs the maintenance of the storage battery unit by disassembling the storage battery unit, and replacing the storage battery module constituting the storage battery unit. Referring to Fig. 1, the above-described operation is illustrated as the storage battery hardware maintenance. The storage battery unit to be maintained is removed from the vehicle as a collection unit for maintenance, and sent to a storage battery manager. The storage battery hardware maintenance operator performs the storage battery hardware maintenance of the collection unit for maintenance. The storage battery unit after the maintenance is sent to the operator as a maintenance complected unit, and mounted on the vehicle again to be used.

The storage battery hardware manager manages the storage battery unit. The storage battery hardware manager holds ownership of the storage battery unit. The storage battery hardware manager collects the storage battery unit from the operator as needed (collection of unit). The storage battery hardware manager supplies the storage battery unit to the operator as needed (supply of unit). The unit collection serves as a route to be used when the storage battery unit reaches the limit of use owing to aging deterioration or the like, and is required to be disassembled and maintained. The unit supply serves as a route to be used when a new storage battery unit or the disassembled and maintained storage battery unit is sent to the operator.

The storage battery unit owned by the storage battery hardware manager is further collected and supplied by the storage battery hardware supplier. The storage battery hardware supplier produces and upcycles the storage battery unit. In the "production", the storage battery hardware supplier collects the storage battery unit from the storage battery hardware manager (collection of unit), and disassembles the storage battery unit into the storage battery modules (disassembly of unit). It is also possible to collect only the storage battery module from the storage battery hardware manager. Meanwhile, the recycled storage battery module is used to produce the storage battery unit (assembly of unit). The produced storage battery unit is supplied to the storage battery hardware manager (supply of unit). In the "upcycling", the storage battery module is collected (collection of module), and recycled into cell materials (recycled into cell materials). This allows recycling of the storage battery module (module recycling), and the recycled storage battery module is supplied (supply of module) for producing the storage battery unit.

The storage battery hardware maintenance operator supplies the storage battery unit to the storage battery hardware manager (supply of unit for maintenance). The storage battery hardware maintenance operator collects the storage battery unit from the storage battery hardware manager (collection of unit for maintenance).

The storage battery data are managed among the operator, the storage battery hardware maintenance operator, the storage battery hardware manager, and the storage battery hardware supplier by utilizing the storage battery management unit provided with a server for managing the storage battery or the like. The storage battery data management includes, for example, data management with respect to the storage battery as the product, and materials for the storage battery. Specifically, operation data and quality data of the storage battery unit are transmitted to and received from the operator. The storage battery data manager offers the maintenance proposal to the operator, and then, a maintenance proposal is sent to the operator. The operator then responds to the maintenance proposal about date and time. The information concerning the maintenance and examination of the unit is transmitted and received between the operator and the storage battery hardware maintenance operator. The information concerning specifications of the storage battery module (module specification), the storage battery unit (unit specification), and the analysis report is transmitted to or received from the storage battery hardware supplier. The information concerning records of supply, collection and maintenance of the unit, and the analysis report is transmitted to or received from the storage battery hardware manager. The storage battery data are managed by the storage battery management unit based on Battery Passport (data management of product and material) which records the information relating to the life cycle of the storage battery from purchase of the material to recycling. The storage battery management unit is accessible by the operator, the storage battery hardware maintenance operator, the storage battery hardware manager, and the storage battery hardware supplier so that the information is shared. For example, a server computer for storage battery data management is exemplified as the storage battery management unit. For example, each of the operator, the storage battery hardware maintenance operator, the storage battery hardware manager, and the storage battery hardware supplier includes a terminal device such as a PC (Personal Computer) and the like, and is connected to the storage battery management unit via a network. The operator, the storage battery hardware maintenance operator, the storage battery hardware manager, and the storage battery hardware supplier access the storage battery management unit through the respective terminals to transmit/receive the necessary information to be shared. The system that allows sharing of the information to attain the circulation system of the storage battery may be regarded as the storage battery management system that manages the storage battery.

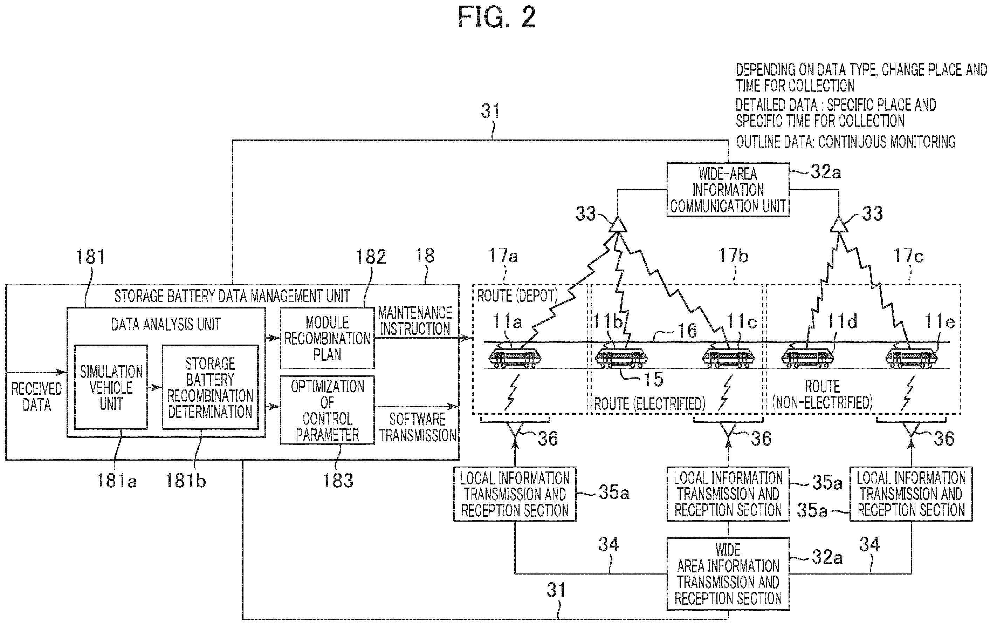

Fig. 2 is a view of a storage battery data management unit 18 for upcycling a storage battery system. For example, the storage battery data management unit 18 is provided to the storage battery management unit of Fig. 1.

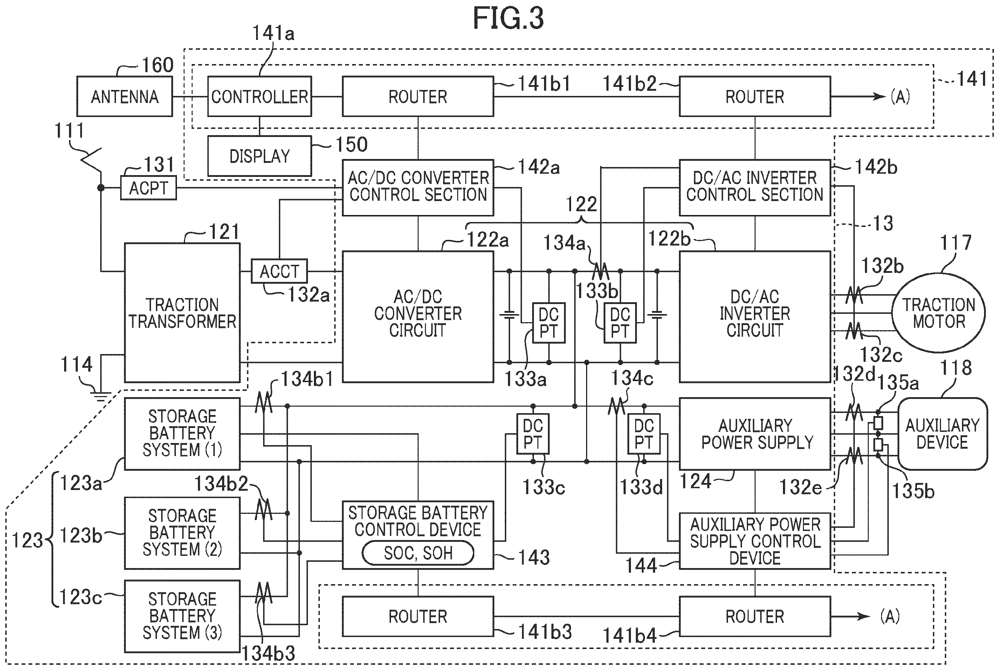

In this case, the route is classified into three sections of a depot, an electrified section, and a non-electrified section. The information is transmitted to or received from the respective routes. That is, the route is classified into the route (depot) 17a, the route (electrified) 17b, and the route (non-electrified) 17c for transmission and reception of the information. A plurality of real vehicles 11 run on a rail 15 such as a track. If real vehicles 11a to 11e (if distinguishment among those values is not necessary, reference numeral 11 may be used) are electric motor cars, a power supply section 16 such as an overhead contact line supplies power to the drive system, and an auxiliary device 118 such as a lighting system and an air conditioner (see Fig. 3). In the case of the vehicles other than the electric motor cars, which can supply power to the drive system and the auxiliary device by a power generation device such as an engine, a fuel cell and the like, and a power storage section such as the storage battery and the like, the power supply section 16 is not required.

The real vehicle 11 is not limited to a single vehicle, but may be a train formed by coupling a plurality of vehicles. A plurality of rails 15 may be constructed parallel to each other to constitute a double-track section that allows the up-train and the down-train to run in reverse directions simultaneously.

The information is transmitted and received between the real vehicle 11 and a wide-area information transmission base 33 via wireless communication. In this case, the wireless communication is established by applying the mobile body communication system designed to continue the communication consecutively while moving in a plurality of limited communication ranges using the fifth generation mobile communication system (5G). The information transmitted and received by a wide area information transmission and reception section 32a is aggregated thereby, and connected to the storage battery data management unit 18 via a wide area information transmission path 31 such as the internet.

The information is transmitted and received between the real vehicle 11 and a local area information transmission and reception base 36 via the wireless communication. The local area information transmission and reception base 36 is provided in a station, depot, and the like, and can be wirelessly communicated with the real vehicle 11 in a stopped state. It is possible to apply the wireless LAN, Bluetooth (registered trademark), infrared communications, and the like, which are suitable for short-range device-to-device communications. The information transmitted and received by the local area information transmission and reception base 36 is aggregated by a local information transmission and reception section 35a, a local area information transmission path 34, and the wide area information transmission and reception section 32a. The information is then connected to the storage battery data management unit 18 via the wide area information transmission path 31 such as the internet.

The storage battery data management unit 18 upcycles hardware and software. Specifically, the storage battery data management unit 18 receives real running data from the real vehicle 11 wirelessly via the wide area information transmission and reception section 32a, the local information transmission and reception section 35a, and the local area information transmission and reception base 36. At this time, the storage battery data management unit 18 receives the real running data for each route of (depot) 17a, (electrified) 17b, and (non-electrified) 17c. The received real running data (received data) are compared with simulated data by a simulation vehicle unit 181a of a data analysis unit 181. A storage battery recombination determination 181b evaluates the upcycling using the comparison results. Based on the upcycling evaluation, the storage battery data management unit 18 executes a module recombination plan 182 as upcycling of hardware of the storage battery system, and a control parameter optimization 183 as upcycling of software of the storage battery system. For example, the module recombination plan 182 refers to maintenance and updating of the storage battery system. The maintenance and updating of the storage battery system is expected to be performed to the real vehicle 11 especially in the siding on the route (depot) 17a. The control parameter optimization 183 refers to updating of the control software for controlling the storage battery system, and the control software for controlling the drive system for driving operations with power from the storage battery system. Control parameters for the control software may be updated. In accordance with the maintenance and updating of the storage battery system, the control software is updated adapted to the maintained or updated storage battery system. The controlling operation of the storage battery system is likely to be influenced by the most deteriorated storage battery contained in the storage battery system. In this case, there is no significantly deteriorated storage battery. This makes it possible to perform more efficient control operation. It is also possible to control electric power consumption to be reduced, and aging deterioration of the storage battery to be further suppressed in accordance with conditions of the storage battery system.

Fig. 3 is a block diagram illustrating a drive system configuration of the real vehicle 11 in the state where the storage battery of the real vehicle 11 is comprised of the plurality of storage battery systems.

The real vehicle 11 allows a real vehicle control section 13 to control main on-board equipment such as a traction transformer 121, a drive control section 122, a main circuit storage battery 123 comprised of a storage battery system (1) 123a, a storage battery system (2) 123b, and a storage battery system (3) 123c, and an auxiliary power supply (APS_DC/AC) 124. An AC/DC converter 122a and a DC/AC inverter 122b will be collectively referred to as the drive control section 122. The drive control section 122 controls driving operations of the traction motor 117.

An AC voltage detector (ACPT) 131 is disposed between a current collector 111 and a primary winding of the traction transformer 121, and inputs a detected voltage signal to the real vehicle control section 13 for the use of controlling operations. AC current detectors (ACCT) 132a to 132e input detected current signals to the real vehicle control section 13 for the use of controlling operations.

A DC part (DC stage) is formed between the AC/DC converter 122a and the DC/AC inverter 122b, by which DC voltage signals detected by DC voltage detectors 133a, 133b are input to an AC/DC converter control section 142a and a DC/AC inverter control section 142b, respectively for the use of controlling operations.

The real vehicle control section 13 includes a train information control device 141, the AC/DC converter control section 142a, the DC/AC inverter control section 142b, a storage battery control device 143, and an auxiliary power supply control device 144. The real vehicle control section 13 is controlled by an upper-level control section such as a traffic control section. The upper-level control section represents an operator such as the train operation control system and the driver. The real vehicle control section 13 is provided with software for controlling operations, sends or receives control signals to or from the upper-level control section, and controls the lower-level controlled sections as intended.

The DC part between the AC/DC converter 122a and the DC/AC inverter 122b are connected to the main circuit storage battery 123 and the auxiliary power supply 124. They are connected to DC voltage detectors 133c to 133d, and the DC current detectors 134a to 134c. DC voltage signals detected by those detectors are input to the real vehicle control section 13 for the use of controlling operations. The main circuit storage battery 123 is comprised of the storage battery systems (1) 123a, (2) 123b, and (3) 123c. Accordingly, the DC current detector 134b is constituted by three DC current detectors 134b1 to 134b3.

The storage battery control device 143 controls the main circuit storage battery 123. The auxiliary power supply control device 144 controls the auxiliary power supply 124 so that the auxiliary device 118 is controlled. The auxiliary device 118 is connected to DC voltage detectors 135a, 135b, and DC voltage signals detected by those detectors are input to the real vehicle control section 13 for the use of controlling operations.

The above-described configuration allows the following data collection.

AC/DC converter : control frequency, input current/voltage, output current/voltage, estimated value of power unit temperature

DC/AC inverter : control frequency, input current/voltage, output current/voltage, estimated value of power unit temperature

Auxiliary power supply : control frequency, input current/voltage, output current/voltage, estimated value of power unit temperature

Main circuit storage battery : charging/discharging current, voltage, SOC, SOH, cell temperature

Train information control device : equipment status, boarding rate, atmospheric/room temperature

In this case, the train information control device 141 is connected to a display (Display) 150 and an antenna (Antenna) 160. The display 150 displays the collected data. The data exemplify the control frequency, input current/voltage, output current/voltage, estimated value of the power unit temperature, which have been derived from the AC/DC converter and the DC/AC inverter as described above. The antenna 160 serves to communicate among the wide area information transmission and reception section 32a, the local information transmission and reception section 35a, and the local area information transmission and reception base 36 as described referring to Fig. 2. The display 150 is not necessarily required for the real vehicle 11.

The train information control device 141 includes a controller 141a, and routers (Router) 141b1, 141b2, 141b3, 141b4. The controller 141a controls the AC/DC converter control section 142a, the DC/AC inverter control section 142b, the storage battery control device 143, and the auxiliary power supply control device 144. Each of the routers 141b1, 141b2, 141b3, 141b4 collects data from the AC/DC converter control section 142a, the DC/AC inverter control section 142b, the storage battery control device 143, and the auxiliary power supply control device 144, respectively, and outputs control signals from the controller 141a.

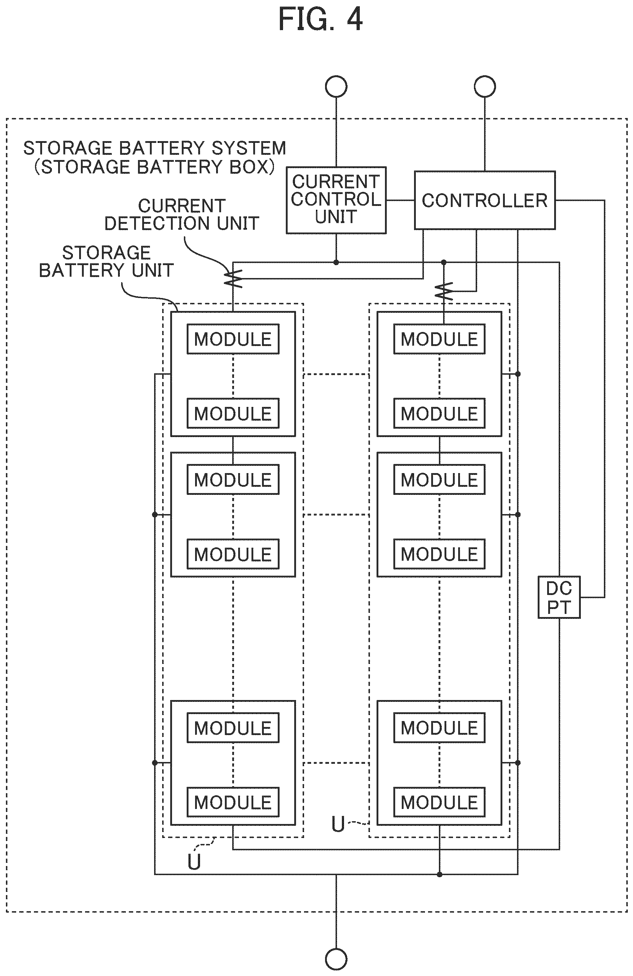

Fig. 4 is a view of an internal configuration of the storage battery system.

The storage battery system is also called a storage battery box. In the storage battery system, a plurality of storage battery units are connected in series, and the plurality of series-connected storage battery units are further connected in parallel. Each of the storage battery units is comprised of a plurality of storage battery modules. Although not illustrated, each of the storage battery modules is comprised of a plurality of storage battery cells. Fig. 4 illustrates each of a plurality of series connected storage battery units as a series unit U. In this case, a plurality of series units U are connected in parallel. Each of the series units U is provided with a current detection unit. A DC voltage detection unit (DCPT) detects an output voltage of the storage battery system (series unit U). The current control unit controls the output current of the storage battery system. The control device (Controller) of the storage battery system controls the current control unit based on the current detection unit and the DC voltage detection unit. This makes it possible to consecutively control the flow and cutoff of the output current of the storage battery system. The current control unit may be a breaker that switches the operation between the flow and cutoff.

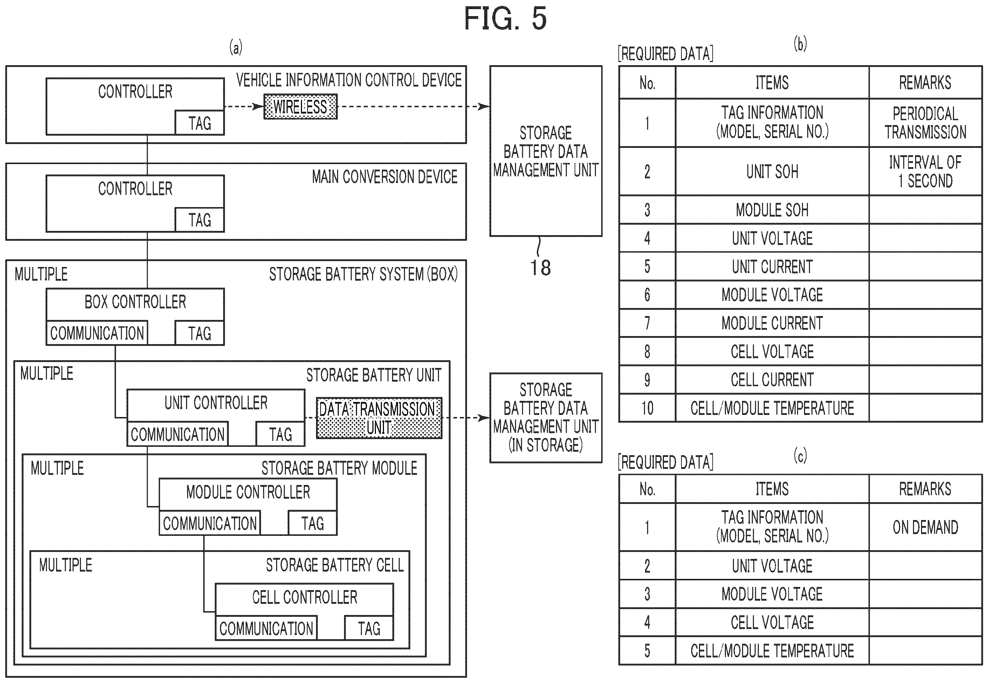

Fig. 5(a) is a view of a controller configuration for data collection from the storage battery system.

As illustrated in Fig. 3, the main circuit storage battery 123 is comprised of a plurality of storage battery systems. The plurality of storage battery systems are exemplified as the storage battery systems (1) 123a to (3) 123c as illustrated in Fig. 3. Each of the storage battery systems is comprised of a plurality of storage battery units. Each of the storage battery units is comprised of a plurality of storage battery modules. Each of the storage battery modules is comprised of a plurality of storage battery cells.

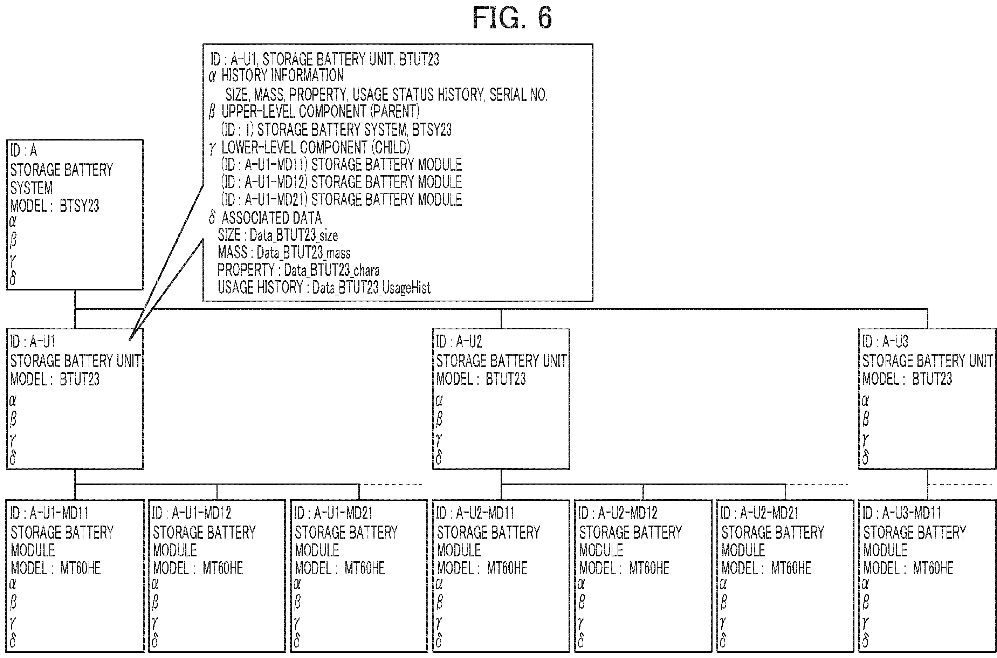

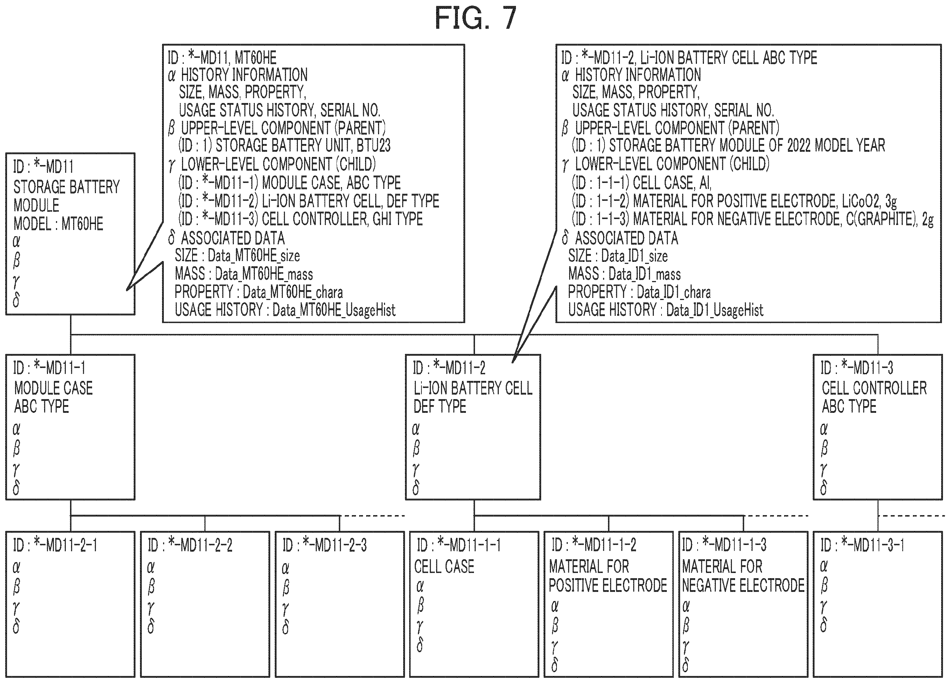

Each of the storage battery systems is provided with a box controller. Each of the storage battery units is provided with a unit controller. Each of the storage battery modules is provided with a module controller. Each of the storage battery cells is provided with a cell controller. Each of the box controller, the unit controller, the module controller, and the cell controller includes a communication I/F (communication interface, illustrated as "communication" in Fig. 5(a)) and a tag. The communication I/F allows data transfer among those controllers. The tag contains tag information about models and model numbers of the storage battery systems, the storage battery units, the storage battery modules, and the storage battery cells for the purpose of identifying an output source of data to be collected. The tag information may be an ID as illustrated in Fig. 6 and Fig. 7 to be described later. The data acquired by those controllers are collected by the controller provided for a main conversion device, and further acquired by the controller provided for a vehicle information control device. The data are transmitted to the storage battery data management unit 18 via the wireless communication as described with reference to Fig. 2. The wireless communication may be performed using OTA (Over the Air) cloud communication. As illustrated in Fig. 5(a), the data can be transmitted to the storage battery data management unit 18 by utilizing the data transmission unit of the storage battery unit. This is applicable to the circumstance that requires acquisition of data of the storage battery unit in storage. This makes it possible to grasp the time-dependent change owing to storage. In this case, either cable communication or wireless communication may be utilized. Meanwhile, it is preferable to acquire data without connection to the external power supply. Preferably, the data transmission unit for the storage battery unit is comprised of, for example, NFC (Near Field Communication) and the like.

Fig. 5(b) and Fig. 5(c) illustrate required data needed as quality data of the storage battery.

Fig. 5(b) shows the required data to be acquired from the vehicle information control device.

This shows that data as items corresponding to Nos. 1 to 10 are required data. The following describes the required data including the tag information (model, model No.), the unit SOH as the SOH (State of Health: storage battery deterioration index) of the storage battery unit, the module SOH as the SOH of the storage battery module, the unit voltage as the voltage of the storage battery unit, the unit current as the current of the storage battery unit, the module voltage as the voltage of the storage battery module, the module current as the current of the storage battery module, the cell voltage as the voltage of the storage battery cell, the cell current as the current of the storage battery cell, and the cell/module temperature as the storage battery cell temperature/storage battery module temperature. The "Remarks" represents comment sections. In this case, the tag information (model, model No.) is periodically transmitted so that the unit SOH is acquired at an interval of 1s.

Fig. 5(c) illustrates the required data acquired from the storage battery unit.

This shows that data as items corresponding to Nos. 1 to 5 are required data. The following describes the required data including the tag information (model, model No.), the unit voltage as the voltage of the storage battery unit, the module voltage as the voltage of the storage battery module, the cell voltage as the voltage of the storage battery cell, the cell current as the current of the storage battery cell, and the cell/module temperature as the storage battery cell temperature/storage battery module temperature. The "Remarks" represents comment sections. In this case, the tag information (model, model No.) is acquired "on demand." The tag information is acquired in response to the request from the manager or the like.

Fig. 6 and Fig. 7 are views each illustrating an example of an ID system that enables traceability.

Fig. 6 illustrates an example of the ID system for the storage battery modules or higher-level components. That is, Fig. 6 illustrates an example of the ID system for the storage battery system, the storage battery units that constitute the storage battery system, and the storage battery modules that constitute the storage battery unit.

Fig. 7 illustrates an example of the ID system for the storage battery modules or lower-level components. That is, the drawing illustrates an example of the ID system for the storage battery module, the storage battery module case as the case for the storage battery modules, the storage battery cells that constitute the storage battery module, the cell controller, the cell case as the case for the cell, a positive electrode material for the cell, and a negative electrode material for the cell.

This ID system allocates IDs hierarchically to the respective elements of the storage battery system, the components, and the materials, and manages all the IDs each assigned with electronic record information. The electronic record includes the record information (upper-level component, lower-level component) that can trace the parent-child relationship.

Specifically, referring to Fig. 6, the IDs are hierarchically allocated to the storage battery systems, the storage battery units, and the storage battery modules. In this case, the ID of A is allocated to the storage battery system. The IDs of A-U1, A-U2, A-U3 are allocated to the respective storage battery units constituting the storage battery system. For example, IDs of A-U1-MD11, A-U1-MD12, A-U1-MD21, and so forth are allocated to the storage battery modules constituting the storage battery unit with the ID of A-U1. Each module has an electronic record corresponding to the allocated ID. The record information $\alpha$ to $\delta$ is allocated to the electronic record. The electronic record includes the record information $\beta$, $\gamma$ that allows tracing of the parent-child relationship. The record information $\beta$ represents the information indicating the higher-level component as the parent. The record information $\gamma$ represents the information indicating the lower-level component as the child. The record information $\alpha$ represents the history information including the size, mass, property, and usage status history. The record information $\delta$ represents the information indicating association data for recording the size, mass, property, and usage status history.

Referring to Fig. 7, the IDs are hierarchically allocated to the storage battery systems, the storage battery units, and the storage battery modules. The IDs are hierarchically allocated to the storage battery module, the storage battery module case, the storage battery cell, the cell controller, the cell case, the positive electrode material for the cell, and the negative electrode material for the cell. In this case, the ID of the storage battery unit that accommodates the storage battery modules is entered in an asterisk "*". For example, if the ID allocated to the storage battery unit is A-U1, actually, the "*-MD11" as the ID of the storage battery module constituting the storage battery unit becomes A-U1-MD11. The IDs allocated to the storage battery module case, the storage battery cell, the cell controller, the cell case, the positive electrode material for cell, and the negative electrode material for the cell are *-MD11-1, *-MD11-2, *-MD11-3, *-MD11-1-1, *-MD11-1-2, *-MD11-1-3, respectively.

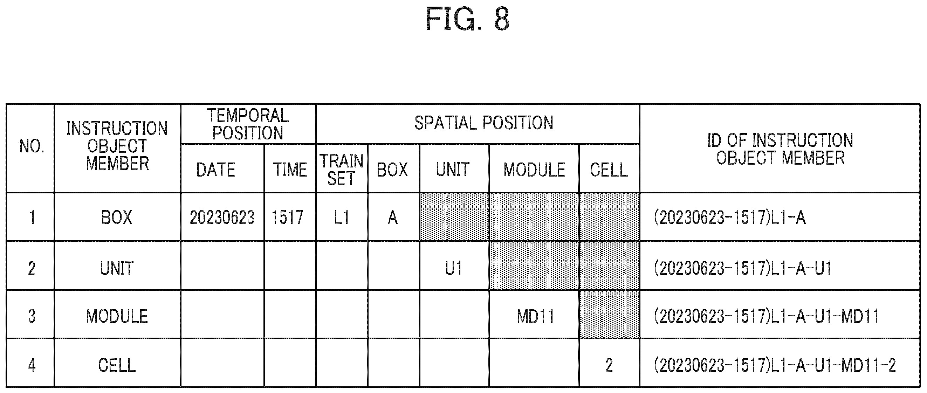

Fig. 8 is a table of an ID address architecture of the ID system.

In this case, the ID address architecture includes four layers expressed as No. 1 to No. 4, respectively. In accordance with an instruction object member, the layer structure is divided into layers of the storage battery system (storage battery box, box), the storage battery unit (unit), the storage battery module (module), and the storage battery cell (cell).

The ID is expressed by a relative address based on an on-board image. The ID is applied to a temporal position and a spatial position. This makes it possible to identify the dedicated equipment or component. The temporal position is a combination of date and time. The spatial position is a combination of the train set, the storage battery system (storage battery box, box), the storage battery unit (unit), the storage battery module (module), and the storage battery cell (cell). The train set represents the train set of the real vehicle 11. This table shows the IDs of the instruction object member applied according to those rules.

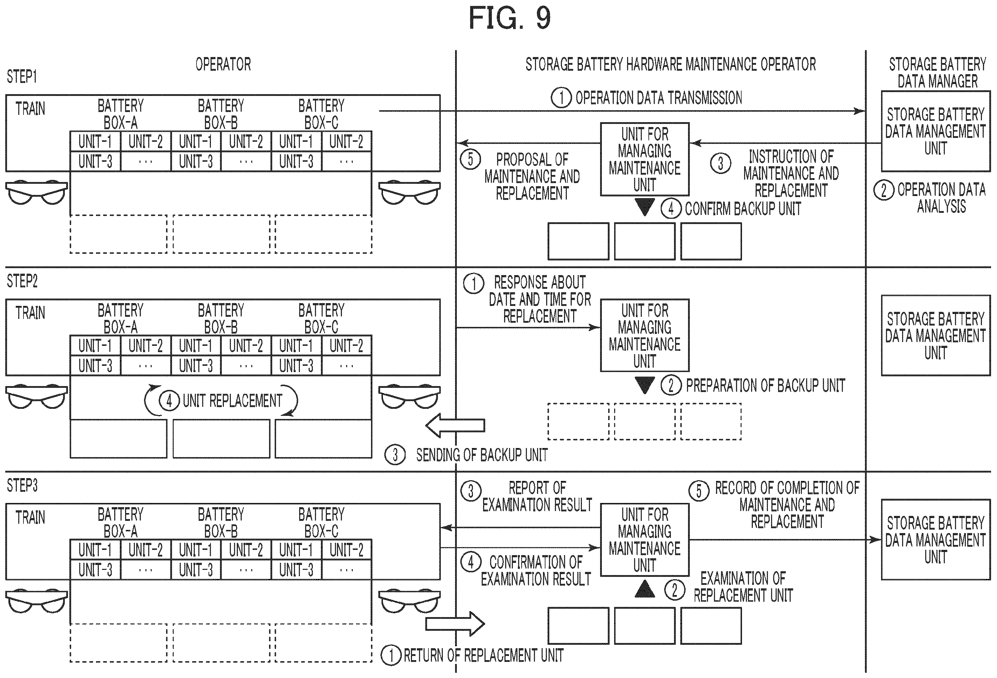

Fig. 9 is a step diagram indicating a maintenance and replacement process of the storage battery system.

Fig. 9 illustrates the maintenance and replacement process of the storage battery system in three stages from Step 1 to Step 3. The drawing illustrates communication among the operator who uses the storage battery, the storage battery hardware maintenance operator who maintains the storage battery, and the storage battery data manager who manages upcycling.

Step 1 is a process executed until the storage battery hardware maintenance operator offers the proposal of the maintenance and replacement of the storage battery. In Step 1, the operator transmits operation data to the storage battery data manager. The storage battery data manager then analyzes the operation data. If the analysis result shows the need to replace the storage battery, the storage battery data manager gives an instruction for maintenance and replacement of the storage battery to the storage battery hardware maintenance operator. The storage battery hardware maintenance operator confirms the backup unit, and offers the proposal of the maintenance and replacement of the storage battery to the operator. The backup unit represents the storage battery unit to be prepared as a replacement for the storage battery unit mounted on the real vehicle 11.

Step 2 is a process executed until the storage battery hardware maintenance operator sends the backup unit for the storage battery. In Step 2, upon reception of the proposal of the maintenance and replacement of the storage battery from the storage battery hardware maintenance operator, the operator responds to the storage battery hardware maintenance operator about the date and time for replacement. The storage battery hardware maintenance operator then arranges for preparing the backup unit. The storage battery hardware maintenance operator sends the backup unit to the depot of the operator from the storage area of the storage battery unit. The storage battery hardware maintenance operator replaces the storage battery unit in the operator's depot.

Step 3 is a process executed until the storage battery data manager receives the maintenance and replacement completion record. In Step 3, the storage battery hardware maintenance operator returns the removed replacement unit from the operator's depot to the storage area of the storage battery unit. The replacement unit represents the storage battery unit that has been mounted on the real vehicle 11, and removed therefrom for mounting the backup unit. The storage battery hardware maintenance operator examines the replacement unit in the storage area of the storage battery unit. The examination result is reported to the operator. The operator then confirms the examination result. The storage battery hardware maintenance operator sends the maintenance and replacement completion record to the storage battery data manager. This allows the storage battery hardware manager to access the maintenance and replacement completion record.

First embodiment

The following describes the specific method for replacing the storage battery unit. A first embodiment of the method for replacing the storage battery unit will be described.

In the first embodiment, the storage battery deterioration index SOH (State of Health) is used as an evaluation index. The storage battery unit is replaced by arranging the storage battery modules to reduce the SOH variation.

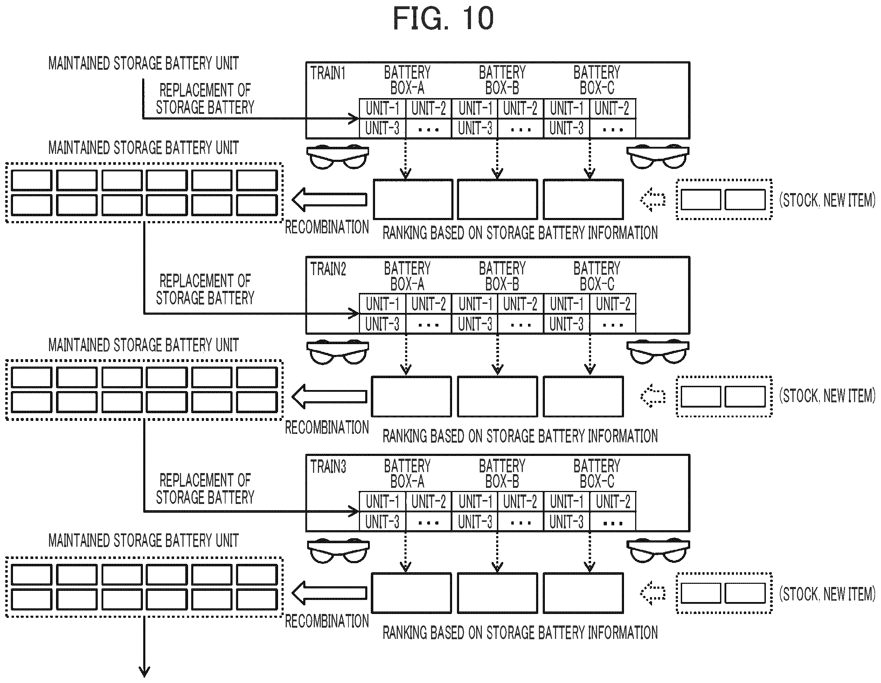

Fig. 10 illustrates an outline of the method for replacing the storage battery unit according to the first embodiment.

As illustrated in the drawing, the storage batteries are replaced in three real vehicles 11 as Trains 1 to 3. The maintained storage battery unit (maintained storage battery unit) is prepared for the Train 1 to replace the storage battery unit that has been mounted with the maintained storage battery unit with the maintained storage battery unit. In the embodiment, the storage battery units of the storage battery systems (storage battery boxes) indicated as Battery Box-A, Battery Box-B, and Battery Box-C have been replaced. The removed storage battery unit has its storage battery modules recombined according to the predetermined method. The method will be described in detail later. The storage battery module is ranked based on the SOH. Based on the rank, recombination of the storage battery modules is planned so as to reduce the SOH variation. This makes it possible to easily prepare the new storage battery unit that has been maintained.

Subsequently, the process will be repeatedly executed. The newly maintained storage battery unit is used for replacing the storage battery for the Train 2. At this time, another newly maintained storage battery unit is prepared, which will be used for replacement of the storage battery for the Train 3.

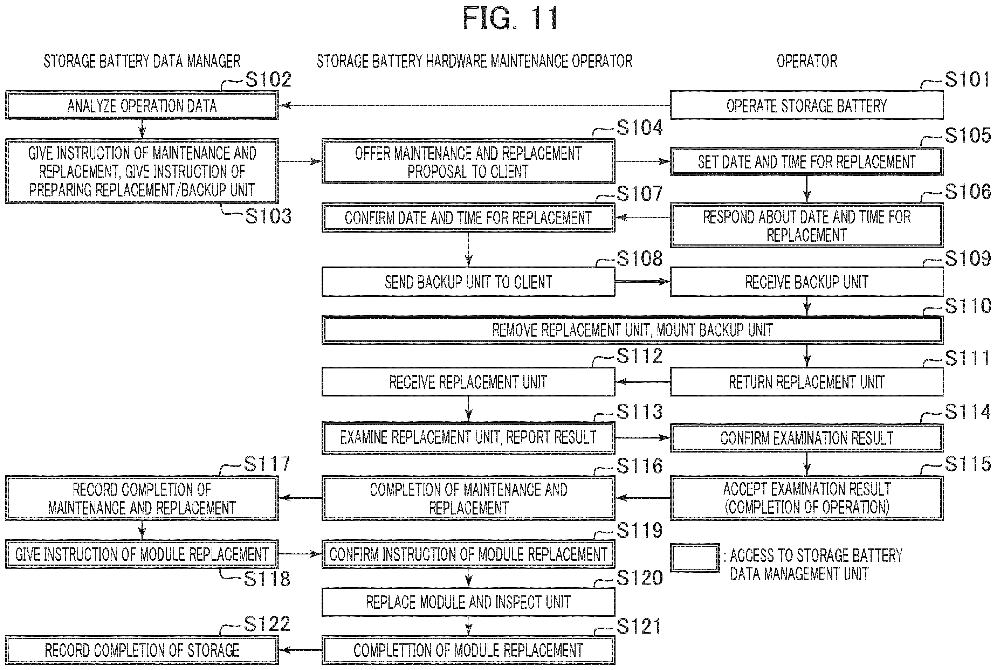

Fig. 11 is a flowchart representing the maintenance and replacement process of the storage battery system.

The operator operates the storage battery (S101). That is, the operator uses the storage battery unit mounted on the real vehicle 11 as the power source. If power is supplied from the current collector 111, or the power generation device such as the engine and the fuel cell is provided, the storage battery is used as a part of the power source.

The operation data upon operation of the storage battery are transmitted to the storage battery data management unit 18 of the storage battery data manager. The storage battery data manager analyzes the operation data by the storage battery data management unit 18 (S102).

If the analysis result shows the need to replace the storage battery, the storage battery data manager gives an instruction for maintenance and replacement of the storage battery to the storage battery hardware maintenance operator via the storage battery data management unit 18. At this time, the storage battery data manager also gives an instruction to prepare for the replacement/backup unit (S103).

The storage battery hardware maintenance operator confirms if the backup unit is ready for replacement, and offers the proposal of maintenance and replacement of the storage battery to the operator via the storage battery data management unit 18 (S104).

The operator sets the date and time for replacing the storage battery using the storage battery data management unit 18 (S105), and responds to the storage battery hardware maintenance operator about the replacement date and time via the storage battery data management unit 18 (S106).

The storage battery hardware maintenance operator confirms if the backup unit is ready for replacement, and confirms the replacement date and time received from the operator via the storage battery data management unit 18 (S107). The backup unit is sent to the depot of the client (operator) from the warehouse of the storage battery unit (S108).

Upon reception of the backup unit at the operator's depot (S109), the storage battery hardware maintenance operator removes the replacement unit in the operator's depot, and mounts the backup unit. The storage battery hardware maintenance operator confirms details of the unit replacement via the storage battery data management unit 18 in the presence of the operator, and records that the replacement has been done as instructed (S110).

The storage battery hardware maintenance operator returns the replacement unit removed in the operator's depot to the warehouse of the storage battery unit (S111).

The storage battery hardware maintenance operator receives the replacement unit at the depot of the storage battery unit (S112).

The storage battery hardware maintenance operator examines the received replacement unit (S113), and inputs the examination result to the storage battery data management unit 18. The examination result is then reported to the operator.

The operator confirms the examination result from the storage battery data management unit 18 (S114), and accepts the examination result (completion of the operation) via the storage battery data management unit 18 (S115).

When the operator accepts the examination result, the storage battery hardware maintenance operator confirms completion of the maintenance and replacement of the storage battery via the storage battery data management unit 18 (S116).

The storage battery hardware maintenance operator sends the maintenance and replacement completion record to the storage battery data manager via the storage battery data management unit 18. The storage battery data manager receives the record (S117). This allows the storage battery hardware manager to access the maintenance and replacement completion record. The storage battery data management unit 18 allows the battery hardware manager to confirm the record of supply and collection of the predetermined unit, and to further confirm the condition of the desired unit (vehicle mounted with the unit, the storage area, and the like).

The storage battery data manager gives an instruction for replacing the storage battery module of the replacement unit to the storage battery hardware maintenance operator via the storage battery data management unit 18 as needed (S118).

Upon reception of the instruction from the storage battery data management unit 18, the storage battery hardware maintenance operator replaces the storage battery module (S119). The storage battery hardware maintenance operator then inspects the storage battery unit having the storage battery module replaced (S120). The storage battery hardware maintenance operator inputs the inspection record of the storage battery unit and the information indicating completion of replacement of the storage battery module to the storage battery data management unit 18, and stores the storage battery unit in the warehouse (S121).

The storage battery data manager receives the storage completion record of the storage battery unit from the storage battery data management unit 18 (S122). This allows the storage battery hardware manager to access the inspection record of the storage battery unit, and the record indicating completion of replacement of the storage battery module. The storage battery data management unit 18 allows the battery hardware manager to confirm the maintenance record of the predetermined unit, and to further confirm the condition of the desired unit (configuration of the storage battery module, and the like).

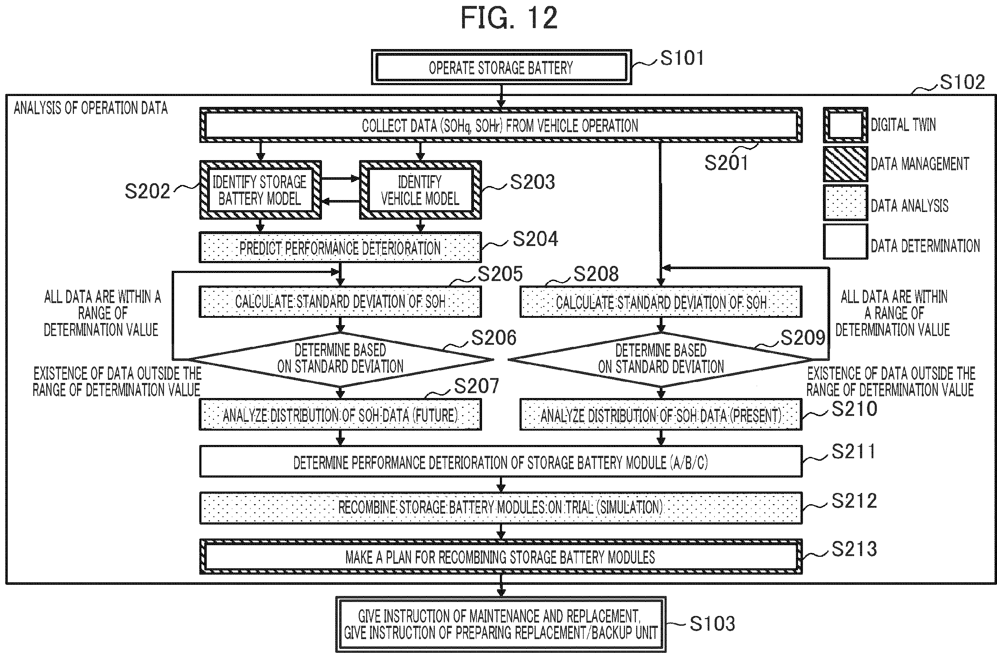

Fig. 12 is a view explaining a process step of S102 of Fig. 11 in more detail.

When the operator operates the storage battery (S101), the storage battery data manager collects data derived from operation of the real vehicle 11. In this case, at least one of the SOHq and SOHr is collected as the storage battery information. The SOHq is an index indicating the capacity deterioration state of the storage battery, and called a capacity maintenance rate. The SOHq is defined as a formula of (present capacity)/(initial capacity) × 100. The SOHr is an index indicating the resistance deterioration state of the storage battery, and called a resistance increase rate. The SOHr is defined as a formula of (present resistance value)/(initial resistance value) × 100. If those indexes do not have to be distinguished from each other, the index may be simply called the SOH (storage battery deterioration index).

Subsequently, processing in process steps either S202 to S207 or S208 to S210 is executed.

In the process steps from S202 to S207, deterioration in the storage battery performance is predicted using the digital twin model. The distribution of SOH of the future storage battery is obtained using the predicted future storage battery SOH. The digital twin is expressed as a model of a physical facility actually in operation. In this case, the model of the storage battery module is identified as the digital twin (S202). The model of the real vehicle 11 is identified as the digital twin (S203).

Digital twins of the storage battery module and the real vehicle 11 are used for predicting the performance deterioration in the storage battery module (S204).

Next, the standard deviation of the SOH is calculated (S205). Based on the standard deviation, a determination is made with respect to the storage battery module (S206).

As a result, if data outside the range of the determination value exist, the future SOH data distribution is analyzed (S207).

Meanwhile, in the process steps from S208 to S210, the SOH distribution of the present storage battery module is obtained using the SOH of the present storage battery, which has been collected without using the digital twin model.

In this case, the SOH standard deviation is calculated (S208), and a determination is made with respect to the storage battery module based on the standard deviation (S209).

As a result, if data outside the range of the determination value exist, the present SOH data distribution is analyzed (S210).

Subsequent to the process steps from S207 and S210, the performance deterioration of the storage battery module is determined (S211). In this case, the storage battery module is classified into three ranks of properties A, B, and C. In this case, the property A indicates the storage battery module with the lowest performance deterioration. The property C indicates the storage battery module with the highest performance deterioration.

Then recombination of the storage battery modules is simulated (S212). It is determined how the storage battery modules are recombined.

The storage battery module recombining step is planned (S213).

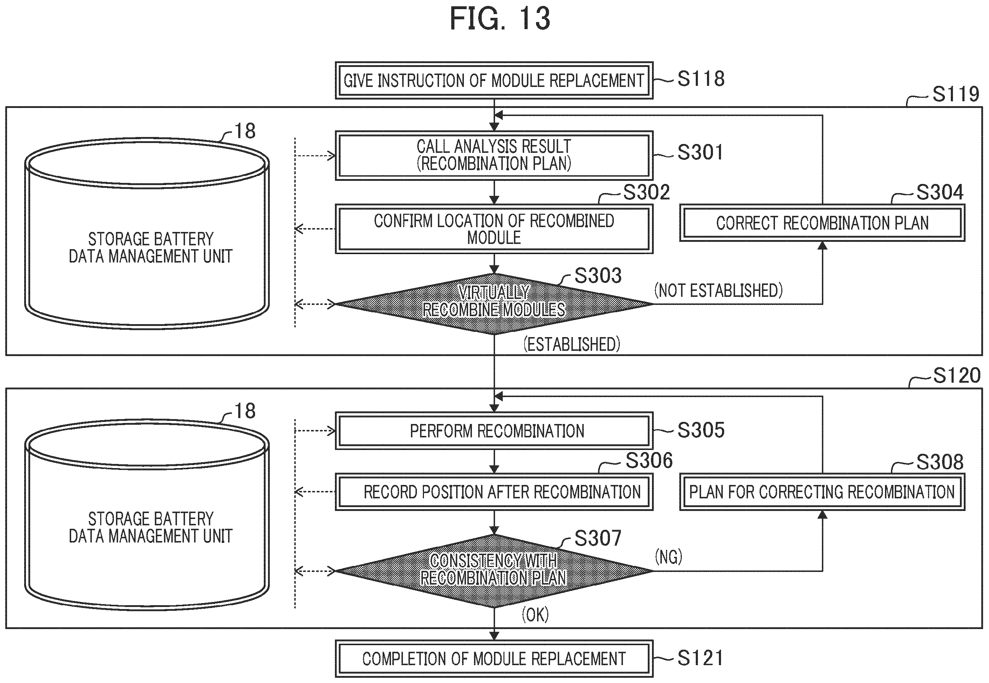

Fig. 13 is a view explaining process steps of S119 and S120 of Fig. 11 in more detail.

If the instruction for replacing the storage battery module is given (S118), the storage battery hardware maintenance operator calls the storage battery module analysis result (recombination plan made in S213) from the storage battery data management unit 18 (S301).

With reference to the storage battery data management unit 18, the location of the storage battery module to be recombined is confirmed (S302).

Based on the condition of the real storage battery module, which has been examined in S113, the storage battery modules are virtually recombined to determine whether or not the recombination is established (S303).

If the recombination is not established because of a large difference between the condition initially estimated in S103 and the real condition examined in S113 (not established in S303), the recombination plan is corrected (S304), and the process then returns to S301.

On the contrary, if the recombination is established (established in S303), the storage battery modules are recombined (S305).

The position (arrangement) after recombining the storage battery modules is recorded in the storage battery data management unit 18 (S306).

It is determined as to consistency with the recombination plan that has been called in S131 (S307). That is, it is determined whether or not the storage battery modules are combined in accordance with the recombination plan.

If there is no consistency owing to erroneous recombination (NG in S307), the recombination correction operation is planned (S308), and the process returns to S305.

Meanwhile, if there is consistency (OK in S307), the process proceeds to S121.

When the instruction for replacing the storage battery module is given, the terminal device of the storage battery hardware maintenance operator who executes processing in S119, S120 functions as the recombination management device for managing recombination of a plurality of storage battery modules in the plurality of storage battery systems. Although not described herein, as illustrated in Fig. 2, the storage battery data management unit 18 further makes a plan for updating the control software for controlling the storage battery system using the digital twin. This makes it possible to upcycle the control software for controlling the storage battery system as well as such hardware as the storage battery.

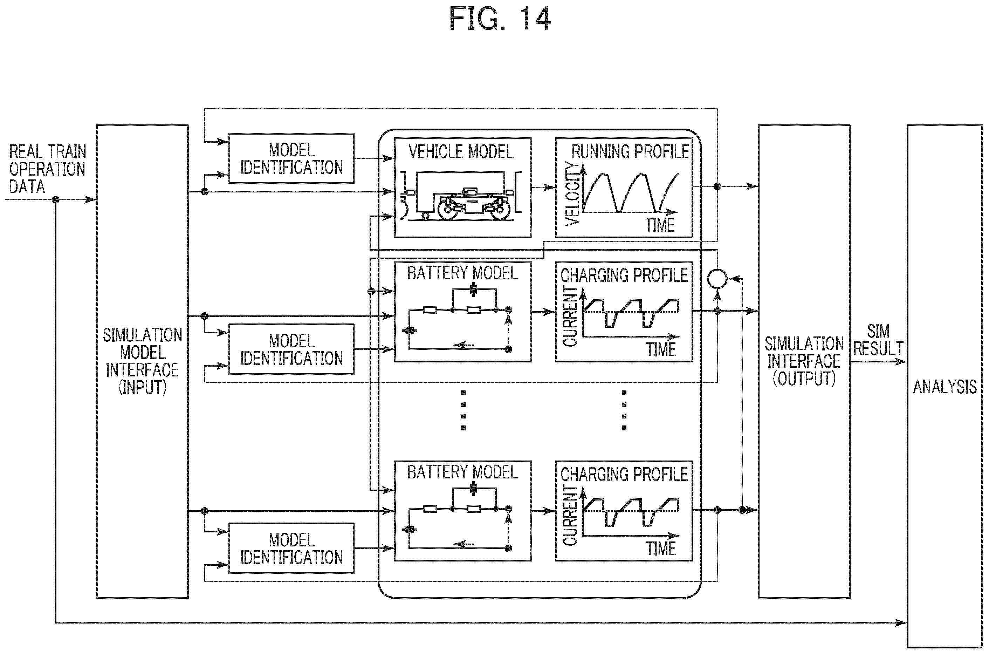

Fig. 14 is a view illustrating a configuration of a model (simulation model) for simulating charging/discharging operations of the storage battery system.

Operation data (Real train operation data) are input.

The input operation data are converted into a predetermined data format through a simulation model interface (Input).

Based on the operation data, the simulation is executed using the vehicle model so that a running pattern (Running Profile) is calculated. The running pattern indicates the velocity relative to time. The running pattern represents the result of simulating the change of the vehicle velocity to time based on the operation data. The calculated running pattern is compared with the real vehicle operation. Based on the resultant difference, the vehicle model is identified (Model identification).

Meanwhile, the simulation is executed using the storage battery model (Battery model) based on the operation data to calculate the charging/discharging pattern (Charging Profile). The charging/discharging pattern represents the charging/discharging current (Current) with respect to time (Time). The charging/discharging pattern is derived for each series unit U as illustrated in Fig. 4. The charging/discharging pattern is obtained as a result of simulating the change in the charging/discharging current flowing through the series unit U while the vehicle is running in accordance with the above-described running pattern. The calculated charging/discharging pattern is compared with the real charging/discharging current. Based on the resultant difference, the storage battery model is identified (Model Identification). In other words, the digital twin of the storage battery module serves to simulate the charging/discharging current when mounting the storage battery module on the real vehicle 11. The resultant simulated results become more accurate.

The running pattern and the charging/discharging pattern are converted into the predetermined data formats through a simulation model interface (Output).

The running pattern and the charging/discharging pattern are analyzed (Analysis). The charging/discharging pattern is analyzed by calculating the SOH for each series unit U. The use of the SOH allows determination of the time for replacement of the storage battery unit. The charging/discharging pattern may be analyzed by calculating the SOH of the storage battery system. The SOH of the storage battery module or the storage battery cell may be calculated by measuring the voltage of the storage battery module or the storage battery cell.

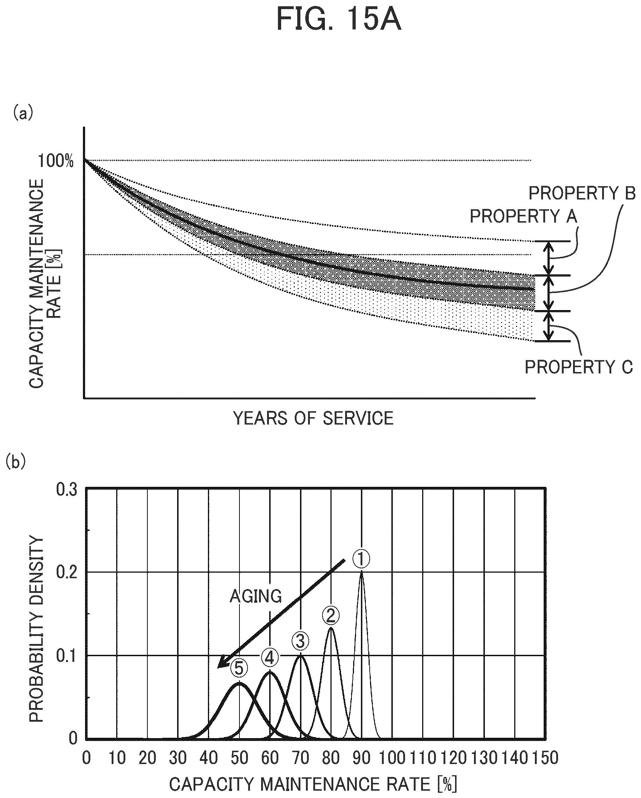

Fig. 15A(a) and Fig. 15A(b) illustrate variation in the capacity maintenance rate (SOHq) of the storage battery module.

Fig. 15A(a) illustrates a relationship between years of service of the storage battery module and the capacity maintenance rate (SOHq). The x-axis represents the years of service of the storage battery module, and the y-axis represents the capacity maintenance rate (SOHq).

Fig. 15A(b) illustrates a relationship between the capacity maintenance rate (SOHq) of the storage battery module and the probability density. The x-axis represents the capacity maintenance rate (SOHq) and the y-axis represents the probability density.

As illustrated in Fig. 15A(a), as the years of service (aging) of the storage battery module increase, the capacity maintenance rate becomes lower. As illustrated in Fig. 15A(b), as the years of service (aging) of the storage battery module increase, variation in the capacity maintenance rate (SOHq) becomes larger.

A thick line of Fig. 15A(a)indicates the average of the capacity maintenance rate (SOHq). When ranking the storage battery module, those within a predetermined range of width while interposing the thick line as the center are ranked as the property B. The property A-ranked storage battery module exhibits the capacity maintenance rate (SOHq) higher than that of the property B-ranked storage battery module. The property C-ranked storage battery module exhibits the capacity maintenance rate (SOHq) lower than that of the property B-ranked storage battery module.

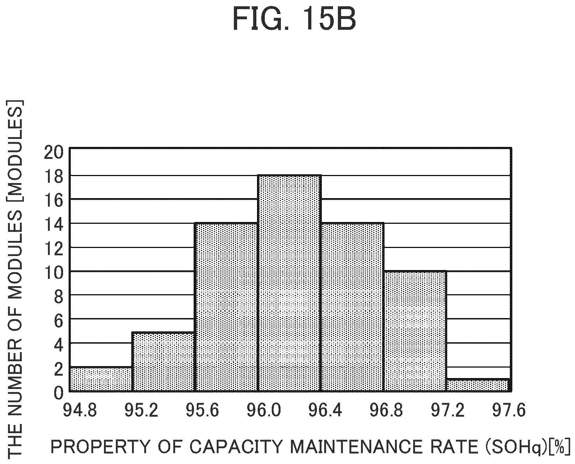

Fig. 15B illustrates variation in the capacity maintenance rate (SOHq) of the actually used storage battery module.

Fig. 15B illustrates the variation in the capacity maintenance rate (SOHq) of 64 storage battery modules which have been used for over a year in the same storage battery system. Referring to Fig. 15B, the x-axis represents the range of the capacity maintenance rate (SOHq), and the y-axis represents the number of storage battery modules in the range.

When charging the storage battery, the voltage (OCV)[V] at the start of charging, the voltage (OCV)[V] at the end of charging, and the charging current[A] applied during the charging are measured. The following formula is calculated to obtain the capacity maintenance rate (SOHq).

SOHq = (charging capacity (measurement value[Ah])/(charging capacity (initial value)[Ah]) × 100[%]

Based on the voltage (OCV)[V] at the start of charging and the voltage (OCV)[V] at the end of charging, the charging capacity (initial value)[Ah] can be calculated with reference to charging characteristic of the new storage battery module (characteristic chart indicating the relationship of the storage capacity with the voltage (OCV)). The charging capacity (measurement value)[Ah] is an integrated value of the charging current[A] that flows from the start to the end of charging.

As illustrated in Fig. 15B, the capacity maintenance rate (SOHq) of the storage battery module when it was 100% new has been lowered, and variation has occurred owing to the use for over a year. The highest capacity maintenance rate (SOHq) ranges from 97.6% to 97.2%. The number of the storage battery modules in the corresponding range is one. The largest number of the corresponding storage battery modules ranges from 96.4% to 96.0%. The number of the storage battery modules in the corresponding range is 18. The lowest capacity maintenance rate (SOHq) ranges from 95.2% to 94.8%. The number of the storage battery modules in the corresponding range is two. The use of the storage battery module causes distribution of variation in the capacity maintenance rate (SOHq) around the average value as the center.

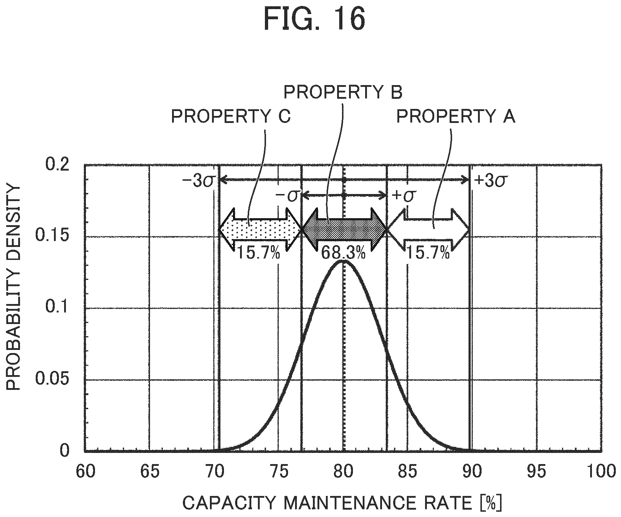

Fig. 16 is a view illustrating a determining method for ranking the storage battery module in accordance with the capacity maintenance rate (SOHq).

As illustrated in Fig. 16, the x-axis represents the capacity maintenance rate (SOHq), and the y-axis represents the standard density.

Preferably, the variation of the capacity maintenance rate (SOHq) is suppressed to be within the range between -10% and +10% for actual use of the storage battery module. In this case, the capacity maintenance rate (SOHq) of the storage battery module is set to be within a range from 70% to 90% inclusive while setting 80% as the center. This range covers from $-3\sigma$ to $+3\sigma$. When ranking the storage battery modules within the range into three properties from A to C, the property B-ranked storage battery module is assumed to be within the range between $-1\sigma$ and $+1\sigma$. In this case, the property B-ranked storage battery modules account for 68.3% of the total. Each of the property A-ranked and the property C-ranked storage battery modules accounts for 15.7% of the total, respectively.

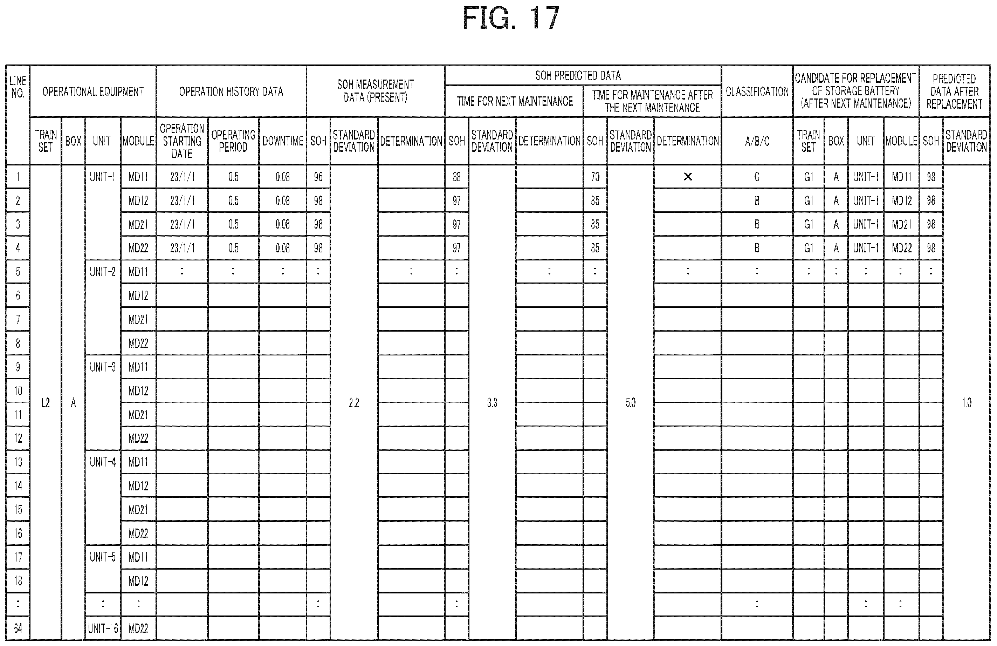

Fig. 17 to Fig. 20 represent storage battery information with respect to the storage battery module to be managed by the storage battery data management unit 18.

Fig. 17 represents the storage battery information that is recorded when ranking the storage battery modules into three ranks of properties A, B, and C in S211 through prediction of performance deterioration of the storage battery module in operation by utilizing the digital twin in S204 of Fig. 12.

The illustrated storage battery information includes sections of "operational equipment" indicating the location of the storage battery module existing in the real vehicle 11 in operation, "operation history data" indicating the operation history of the provided storage battery module, "SOH measurement data (present)" as measurement data of the present SOH, "SOH predicted data" as predicted data of future SOH, "classification" indicating the result of ranking, "candidate for replacement of storage battery (after next maintenance)" indicating the present location of the storage battery module expected to be mounted upon replacement in the next maintenance, and "predicted data after replacement" as predicated data of SOH after replacement. The "operational equipment" is comprised of "train set" indicating the real train in operation, "box" indicating the storage battery box in the real train, "Unit" indicating the location of the storage battery unit in the storage battery box, and "Module" indicating the location of the storage battery module in the storage battery unit. The "operation history data" is comprised of "operation starting date" indicating the date at the start of operating the new or recycled storage battery module when it is used for the real vehicle 11 or stored in the warehouse under the circulating system, "operating period" indicating the time elapsing from the operation starting date, and "downtime" indicating the period for which the storage battery module has not been used in the real vehicle 11 since the operation starting time. The "SOH measurement data (present)" is comprised of "SOH" indicating the present SOH of each of the provided storage battery modules, "standard deviation" indicating variation in the SOH of the storage battery module provided in the storage battery box, and "determination" indicating abnormality/non-abnormality in the storage battery module. The "SOH predicted data" is comprised of "time for next maintenance" indicating predicted data in the next scheduled maintenance of the real vehicle 11, and "the time for maintenance after the next maintenance" indicating the predicted data in the next scheduled inspection. Each of the respective sections is comprised of "SOH" indicating the SOH of the respective storage battery modules, "standard deviation" indicating variation in the SOH, and "determination" indicating abnormality/non-abnormality in the storage battery module, which are estimated at each point in time. Like the section of "in operation", the "candidate for replacement of storage battery (after next maintenance) indicates the present location of the storage battery modules expected to be located in hierarchical layers of "train set", "box", "Unit", and "Module". The "predicted data after replacement" is comprised of "SOH" indicating the SOH of the respective storage battery modules, and "standard deviation" indicating variation in the SOH, both of which are estimated at the time of replacement.

Utilizing the digital twin model, the respective values of SOH at the time for next maintenance and the time for maintenance after the next maintenance are predicted. The SOH predicted data are recorded for each of the storage battery modules. Each of the storage battery modules is identified by the location in the train set, box (storage battery system, storage battery box), Unit (storage battery unit), and Module (storage battery module). There are 16 Units (storage battery units) stored in the box A (storage battery system, storage battery box) of the train set L2. Those units are designated as Unit-1 to Unit-16. Each of Units stores four Modules (storage battery modules) which are designated as MD11, MD12, MD21, MD22, respectively. Among storage battery modules stored in Unit-1 in the box A of the train set L2, those at the MD11 are C-ranked, and those at the MD12, MD21, MD22 are all B-ranked. This indicates that those modules are recombined. It is understandable that the storage battery unit (storage battery modules) in the box A of the train set G1 (stock for maintenance) is planned to be mounted in the box A of the train set L2 at the time for the next maintenance. When the storage battery unit is mounted, the SOH at that time becomes approximately 98%. This shows that the standard deviation indicating the SOH variation becomes 1.0.

Concerning the storage battery module at MD11 in the Unit-1, the mark "x" in the "determination" of the "time for next maintenance" indicates that the SOH estimated at the time for maintenance after the next maintenance is brought into the abnormal state that is unsuitable for the use. In this case, it is estimated that the performance of the storage battery module cannot be held at the time for maintenance after the next maintenance. Accordingly, the need for replacement is suggested in the next maintenance. Rather than determining on the replacement of the storage battery based on the result that the SOH has reached the limit value, prediction of the timing at which the SOH reaches the limit value allows the proposal for upcycling the storage battery while the storage battery is exhibiting the desired performance. When malfunction occurs in the storage battery system owing to the SOH that has reached the limit value, it will take time to identify the faulty storage battery module from a safety standpoint. In this case, the storage battery system and the storage battery module cannot be re-used from the time when the malfunction occurs until its cause is identified. The embodiment can avoid occurrence of such malfunction. The storage battery data management unit 18 acquires the future SOH from the digital twin with respect to the storage battery module and the vehicle that uses the storage battery module. This makes it possible to evaluate the improvement in the value of the storage battery. The use of the digital twin allows the storage battery data management unit 18 to acquire the future SOH obtained at the time of maintaining the real vehicle 11. This makes it possible to replace the storage battery unit along with the periodic maintenance of the real vehicle 11.

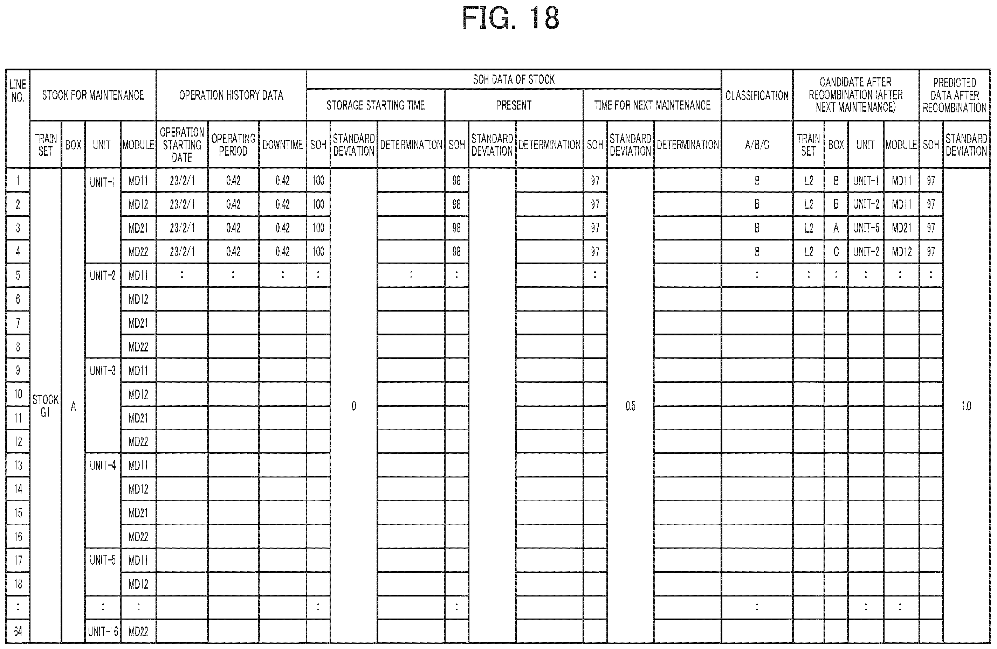

Fig. 18 represents storage battery information of the storage battery module in storage, which is recorded when making a recombination plan of the storage battery module after performing the recombination of the storage battery module on trial in S212 of Fig. 12.

The illustrated storage battery information that is similar to the one as illustrated in Fig. 17 includes a section of "SOH data of stock" indicating SOH data of the storage battery unit (modules) in storage instead of the "SOH measurement data (present)" and the "SOH predicted data". The "SOH data of stock" is comprised of "storage starting time" indicating data (past data) at the start of storage, "present" indicating the present data, and "time for next maintenance" indicating estimated data in the next scheduled maintenance. Similar to the "SOH measurement data(present)" as illustrated in Fig. 17, each section is comprised of "SOH", "standard deviation", and "determination".

In the process of trial recombination of the storage battery modules, the storage battery module is removed in the next maintenance, and placed (stored) in the storage as a result of the recombination. The location of the removed storage battery module placed in the storage is recorded. The Unit-1 in the box A of the train set G1 (storage) stores four storage battery modules (MD11, MD12, MD21, MD22). Operations of those storage battery modules started on February 1, 2023 under the circulation system. Each of the operating period and the downtime is 0.42[year]. The SOH at the storage starting time is 100%, and the standard deviation is zero. Accordingly, from this information, it is understandable that the new or recycled storage battery modules have been immediately stored in the storage. The information indicates that the present SOH is 98%, and the predicted SOH in the next maintenance is 97%. It is understandable that, after the next maintenance, instead of the present storage battery module, the storage battery module removed from the train set L2 in the next maintenance is recombined. It is then placed and stored for the next maintenance (replacement). For example, it is understandable that the storage battery module currently existing at the MD11 of the Unit-1 in the box B of the train set L2 is expected to be placed at the MD11 of the Unit-1 in the box A. Although not illustrated, it is also the case that the new or the recycled storage battery module is placed after the next maintenance In this case, the location of the storage where the new or the recycled storage battery modules are stored is displayed. It is understandable that the SOH at the time for the next maintenance becomes approximately 97%, and the standard deviation indicating the SOH variation becomes 1.0.

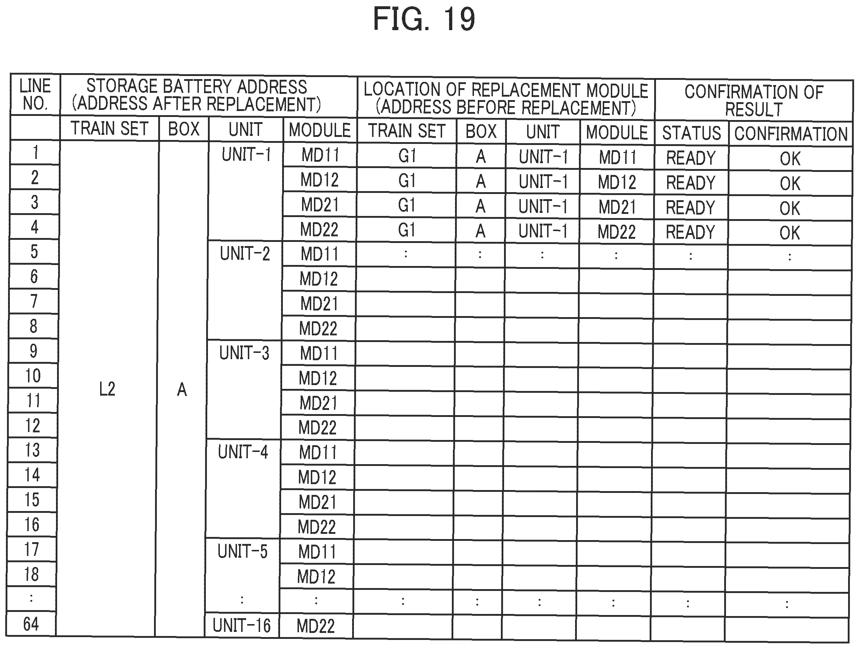

Fig. 19 represents storage battery information for confirmation in S104 of Fig. 11 whether the storage battery module in storage is ready for replacement.

The illustrated storage battery information includes sections of "storage battery address (address after replacement)" indicating the location after replacement of the storage battery unit (storage battery module) in storage, "location of replacement module (address before replacement)" indicating the present location of the storage battery unit (storage battery module) before the replacement, and "confirmation of result" indicating completion of preparation for replacing the storage battery unit (storage battery module) before the replacement. Similar to the "operational equipment" of Fig. 17, the "storage battery address (address after replacement)" is comprised of "Train set", "Box", "Unit", and "Module" in hierarchical layers. Similar to the "candidate for replacement of storage battery (after next maintenance)" of Fig. 17, the "location of replacement module (address before replacement" indicates the present location of the storage battery module before replacement in hierarchical layers of "Train set", "Box", "Unit", and "Module". The "confirmation of result" is comprised of "status" indicating the replacement preparation status of the storage battery unit (storage battery module) before replacement, and "confirmation" indicating whether or not the replacement is possible.

The storage battery hardware maintenance operator receives an instruction of maintenance and replacement of the storage battery, and an instruction of preparing replacement/backup unit from the storage battery data manager via the storage battery data management unit 18. Upon reception of the instruction of maintenance and replacement for replacing the Unit-1 (MD11) in the box A of the train set L2 with the storage battery unit (storage battery module) stored in the Unit-1 (MD11) in the box A of the train set G1, the storage battery hardware maintenance operator confirms the replacement preparation status of the corresponding storage battery unit (storage battery module) via the storage battery data management unit 18 based on the storage battery information, and inputs the confirmation result to the storage battery data management unit 18. The storage battery data management unit 18 determines whether or not the replacement is possible based on the input replacement preparation status, and displays the determination result. For example, if the storage battery module is in the mounting process in the storage battery unit, or if the storage battery module temporarily removed from the storage battery unit is in the maintenance process, such status is displayed in the "status", and NG is displayed in the "confirmation" indicating that the replacement cannot be done at present. When all the storage battery units (storage battery modules) before replacement become replaceable, the maintenance and replacement proposal is offered to the client via the storage battery data management unit 18.

If it is necessary to store the storage battery unit combined with the storage battery module in the warehouse as the replaceable storage battery unit, the "status" and "confirmation" may be displayed by the storage battery unit without displaying the layer of the storage battery module.

It is also possible to offer the maintenance and replacement proposal to the client only when all the storage battery units (storage battery modules) before replacement become replaceable.

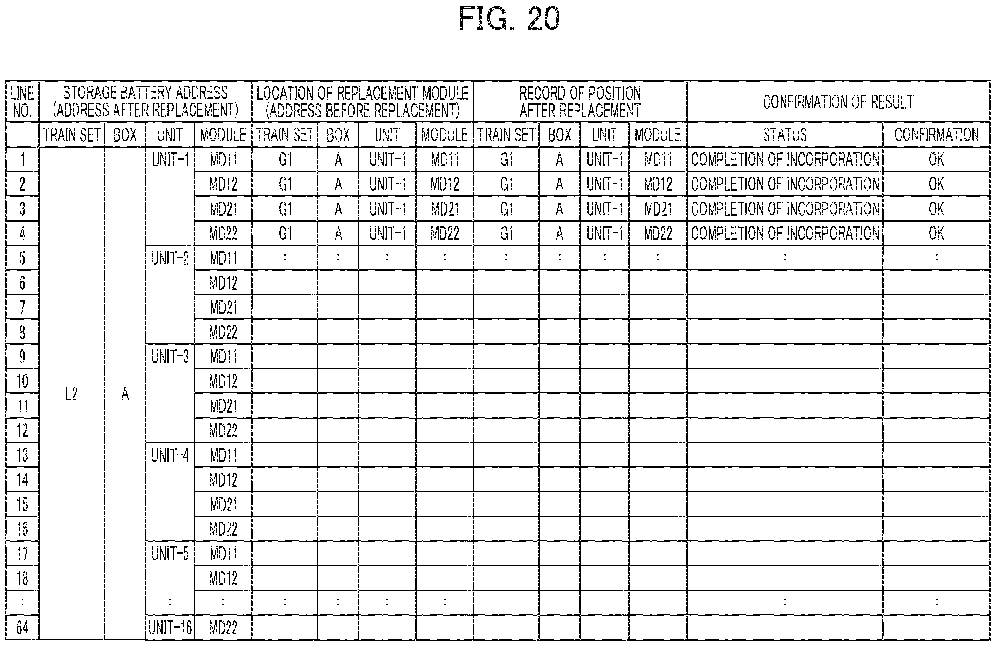

Fig. 20 represents storage battery information for confirmation of a position (arrangement) after replacement of the storage battery module in S110 of Fig. 11.

The illustrated storage battery information is similar to the one as illustrated in Fig. 19 except an additional step of "record of replacement position" indicating the storage battery unit (storage battery module) which has been actually replaced in the real vehicle. Similar to the "candidate for replacement of storage battery (after next maintenance)" of Fig. 17, the "record of replacement position" indicates the location of the replaced storage battery unit (module) before the replacement in hierarchical layers of the "Train set", "Box", "Unit", and "Module". The "confirmation of result" is different from the one as illustrated in Fig. 19. This section is comprised of "status" indicating the replacement status of the storage battery unit (storage battery module), and "confirmation" indicating whether or not the replacement has been completed.

In the presence of the client, the storage battery hardware maintenance operator confirms the storage battery information via the storage battery data management unit 18, removes the storage battery unit (storage battery module), and performs mounting (replacement) of the storage battery unit (storage battery module) as the replacement. The operation result is then input to the storage battery data management unit 18. After completion of replacement operations of all the storage battery units (storage battery modules), completion of the replacement operation is recorded in the storage battery data management unit 18. This allows the client and the storage battery hardware manager to confirm completion of the replacement operation.

If it is necessary to perform the replacement operation in the condition where the storage battery module is combined with the storage battery unit, the "status" and "confirmation" may be displayed with respect to each of the storage battery units without displaying the layer of the storage battery module.

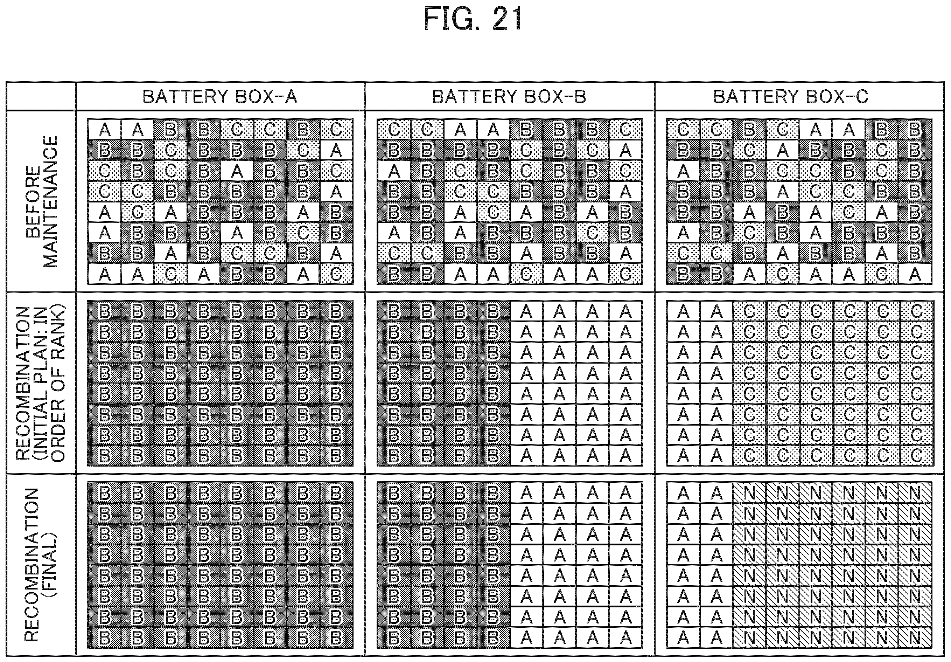

Fig. 21 is a view for comparing the arrangement of the storage battery modules between before and after the recombination of the storage battery modules.

Upper sections of Fig. 21 show arrangements before recombination (before maintenance).

The storage battery units mounted in the respective storage battery systems (storage battery box, box) as Battery Box-A, Battery Box-B, and Battery Box-C are distinguishingly separated by thick lines. That is, 16 storage battery units are stored in the storage battery system (storage battery box, box). The storage battery unit stores four storage battery modules. The drawing illustrates the ranked storage battery modules. That is, the storage battery modules are ranked into properties A, B, and C.

Intermediate sections of Fig. 21 show arrangements after recombination.

In this case as the initial plan, the property A-ranked storage battery modules are arranged in the Battery Box-A. The property A-ranked and property B-ranked storage battery modules are arranged in the Battery Box-B mixedly. The property A-ranked and the remaining property C-ranked storage battery modules are arranged in the Battery Box-C mixedly. In this case, the property C-ranked storage battery module is subjected to the replacement. The property C-ranked storage battery module is collected by the storage battery hardware supplier, and recycled to the cell material. Alternatively, the property C-ranked storage battery module is maintained, and then reused for other routes or other equipment under moderate conditions with respect to the SOH.

Lower sections of Fig. 21 show arrangements after recombination (final).

The property C-ranked storage module subjected to the replacement is replaced with the maintained or the new storage battery module. The property A-ranked storage battery modules and the maintained or new storage battery modules are arranged in the Battery Box-C mixedly.

In this case, based on the ranking results, the storage battery data management unit 18 is allowed to design arrangement of the storage battery modules so that the storage battery modules with the same rank, or those with ranks adjacent to each other are stored in the same storage battery system. This makes it possible to easily reduce the SOH variation.

At this time, the storage battery data management unit 18 is allowed to make a plan for using the maintained storage battery module or the one ranked new for replacement without using the storage battery module ranked with a relatively lower SOH. This makes it possible to keep the performance of the storage battery system (storage battery box, box) utilizing the storage battery circulation system. The storage battery data management unit 18 is also allowed to make a plan for circulating the storage battery module that is no longer used, and to display the plan (recycled, reused for other routes or other equipment).

In the first embodiment, the storage battery data management unit 18 functions as a storage battery management device that manages a plurality of storage battery systems each storing a plurality of storage battery modules.

The storage battery data management unit 18 may be configured to include the function as an acquisition unit for acquiring the storage battery information relating to the respective storage battery modules, and the function as a unit for planning the arrangement of the storage battery modules to be stored in the storage battery system so as to reduce variation in the predetermined evaluation index that influences performance of the storage battery module. In the first embodiment, the SOH is exemplified as the evaluation index. In this case, the evaluation index may be referred to as the deterioration level of the storage battery module. This makes it possible to evaluate the storage battery performance more accurately.

As the storage battery modules are equivalent, and replaceable with one another, each of the initial capacity and the resistance value of those storage battery modules may be regarded as equivalent. Accordingly, the present capacity and the resistance value may be used as the evaluation indexes of deterioration level of the storage battery module. This makes it possible to simply evaluate the storage battery performance.

Second Embodiment

The following describes a second embodiment of the method for replacing the storage battery.

In the second embodiment, in addition to the deterioration level of the storage battery module, arrangement of the storage battery modules is planned so that variation in the deterioration level of the storage battery module is reduced based on the temperature at which the storage battery module is used as the evaluation index. The following describes the embodiment focusing on the difference from the first embodiment.

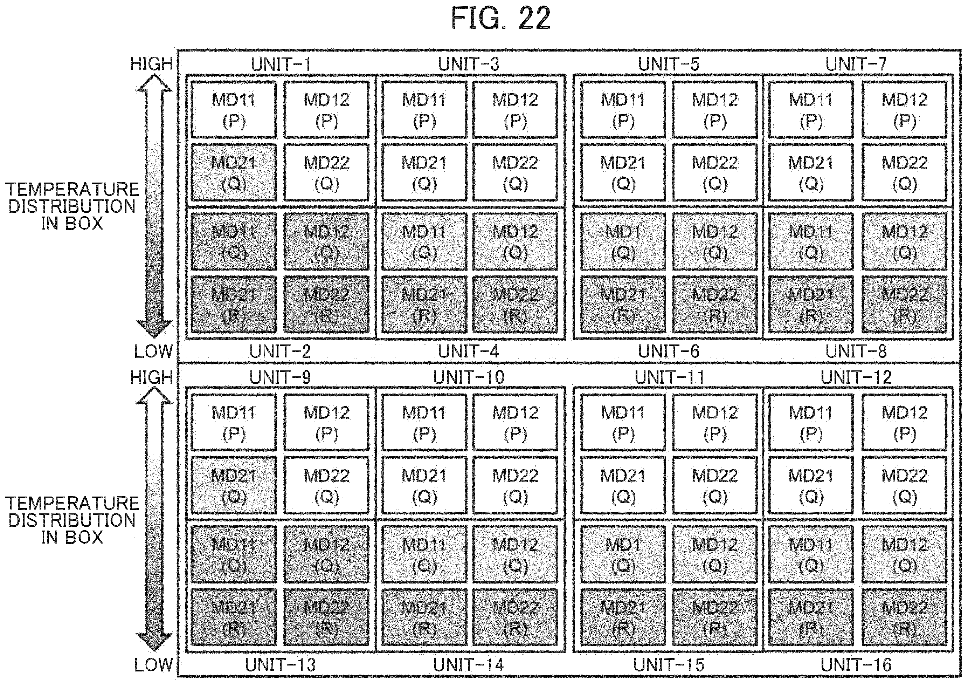

Fig. 22 is a view illustrating a temperature distribution when using the storage battery modules.

The drawing shows that the Battery Box stores 16 storage battery units from Unit-1 to Unit-16. Each of those Unit-1 to Unit-16 stores four storage battery modules MD11, MD12, MD21, MD22.

Fig. 22 illustrates the temperature distributions in the Battery Box (box). In this case, referring to each location of the Unit-1 to Unit-8, and Unit-9 to Unit-16, the temperature becomes higher from the lower section to the higher section of the chart.

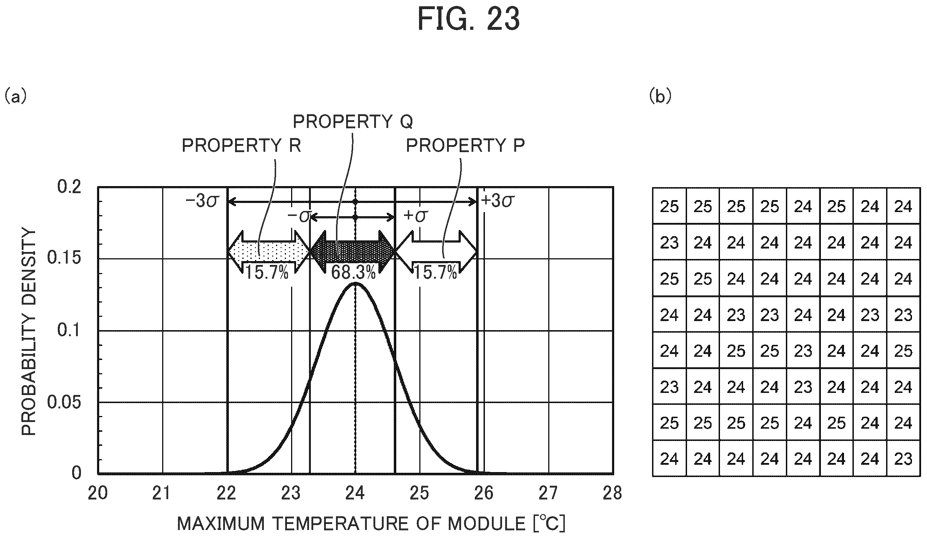

Fig. 23(a) illustrates a method for determining ranking based on the temperature at which the storage battery module is used.

In Fig. 23(a), the x-axis represents the temperature at which the storage battery module is used, and the y-axis represents the standard density. Fig. 23(b) illustrates real data of the temperature used upon formation of the graph of Fig. 23(a).

In the case of actual use of the storage battery module, the temperature variation is brought to be within the range between 22°C and 26°C inclusive while centering on 24°C. This range covers from $-3\sigma$ to $+3\sigma$. The storage battery modules within this range are ranked into three properties P to R. The property Q-ranked storage battery modules are specified to be within the range from $-1\sigma$ to $+1\sigma$. In this case, the property Q-ranked storage battery modules account for 68.3% of the total. Each of the property P-ranked and the property R-ranked storage battery modules accounts for 15.7% of the total, respectively. Fig. 22 shows the ranking results expressed as (P), (Q), and (R).

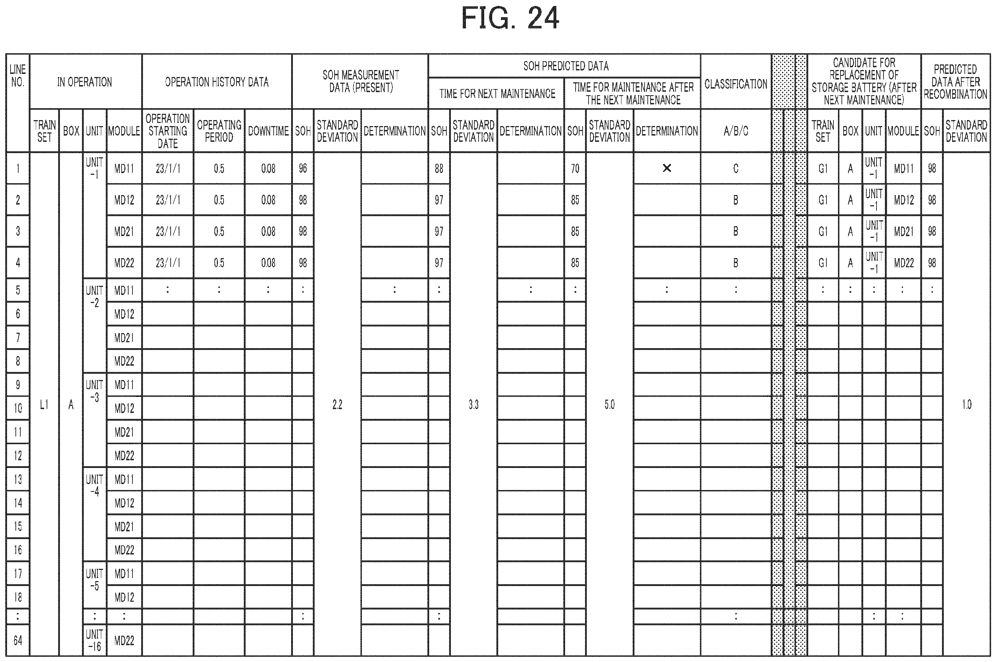

Fig. 24 is a view representing storage battery information of the storage battery module, which is managed using the storage battery data management unit 18.

Most of the illustrated storage battery information is similar to the one as illustrated in Fig. 19 except additional steps of "temperature measurement data" indicating the temperature information of the respective storage battery modules, and "classification" as a result of ranking based on the temperature information. The "temperature measurement data" is comprised of "maximum MD temperature" indicating the maximum temperature of each of the storage battery modules, and "standard deviation" indicating variation in the maximum temperature.

The temperature information that influences the aging performance of the storage battery may be entered into the "temperature measurement data." For example, concerning the capacity maintenance rate as one of indexes indicating the storage battery aging performance, as the temperature at which the storage battery cell is charged/discharged becomes higher, the decline rate of the capacity maintenance rate (performance deterioration) becomes higher. As the storage battery cell is charged/discharged at the fixed temperature more frequently, the rise rate (performance deterioration) of the internal resistance increase rate becomes higher. It is possible to display the maximum temperature, the minimum temperature, the average temperature, and/or the accumulated temperature of the respective storage battery modules may be displayed to represent the aging performance that gives a significant degree of impact.

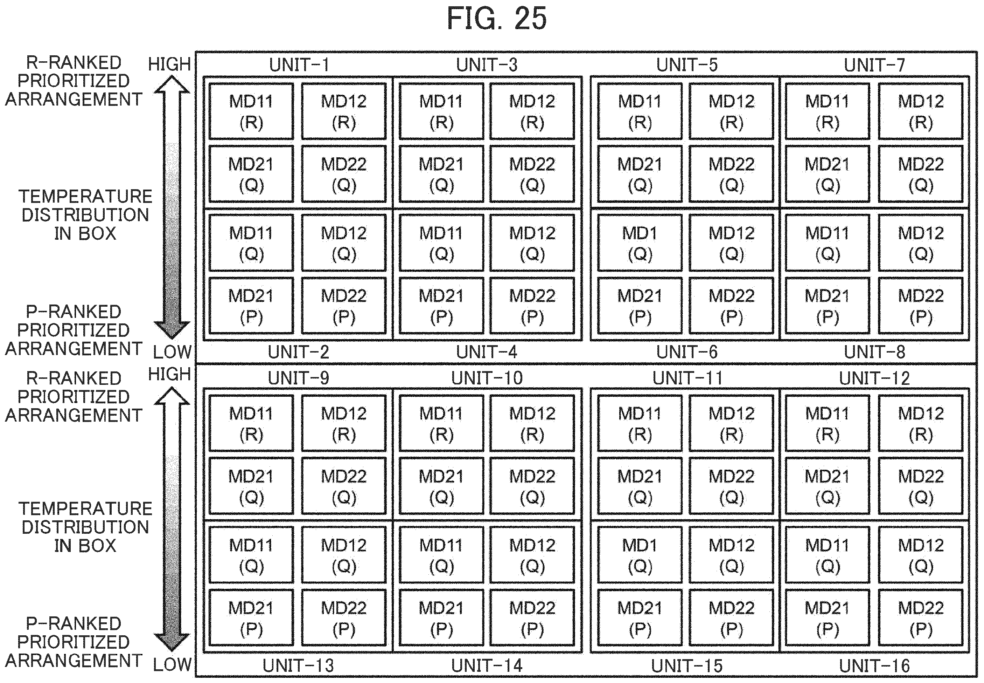

Fig. 25 is a view representing an arrangement of the storage battery modules after recombination according to the second embodiment.

With reference to the Unit-1 to Unit-8, and the Unit-9 to Unit-16, the property P-ranked storage battery modules are arranged preferentially in the lower section. The property R-ranked battery modules are arranged preferentially in the upper section. As a result, many of the property Q-ranked battery modules are arranged in the intermediate section of the chart.

In the second embodiment, in addition to the deterioration level of the storage battery module, the temperature at which the storage battery module is used is utilized as the evaluation index. The storage battery data management unit 18 ranks the storage battery module in accordance with the temperature, and, based on the ranking result, makes a plan for arranging the storage battery modules so that variation in the deterioration level of the storage battery module is reduced. The reduced variation in the deterioration level of the storage battery module allows improvement in the aging performance of the storage battery system.

Specifically, the storage battery data management unit 18 is configured to bring the storage battery module that has been used at a position at a relatively higher temperature to a position at a relatively lower temperature, and to bring the storage battery module that has been used at a position at a relatively higher temperature to a position at a relatively lower temperature. This allows the respective deterioration rates of the storage battery modules to be made further uniform.

The mass of the single railway vehicle is approximately 40 tons, and the mass of a passenger car is approximately two tons at a maximum. The mass ratio of the railway vehicle to the passenger car is approximately 20 to 1. That is, the battery powered electric railcar (BEMU: Battery electric multiple unit) is required to secure the storage battery capacity approximately 20 times higher than that of the electric vehicle (EV).

Furthermore, the railway vehicle is required to generate the storage battery output approximately 20 times higher than that of the EV in accordance with the mass ratio. The storage battery voltage is generated as high as possible to raise the output without causing the current loss. In many cases, the voltage of the battery powered electric railcar (BEMU) is within the range approximately from 600 to 1800 V conforming to the general drive system.

As the single cell voltage of the Li-ion battery is approximately 3.6 V, the number of connected cells per series connection becomes enormous for securing the high voltage. For example, series connection of 192 cells secures 691 V. In order to secure the required storage battery capacity, the number of cells to be connected, for example, two or three parallel connections is further increased. In many cases, the predetermined number of storage battery cells constitute the module, and a plurality of the storage battery modules constitute the unit. The on-board storage battery is modularly configured as described above for the purpose of easy detachment from or attachment to the vehicle.

The storage battery cells of the Li-ion battery store electrical charges (charging), and release electrical charges (discharging) through the chemical reaction of materials for the positive electrode and the negative electrode. In accordance with the stored electrical charges, the predetermined potential difference (OCV : Open Circuit Voltage) is generated. As the power storage operation involves the chemical reaction, the repeated power storage operation, thus, progresses deterioration in the storage battery cell. It is known that the capacity decline (index : capacity maintenance rate) and the internal resistance increase (index: internal resistance increase rate) are signs of deterioration in the storage battery. The capacity maintenance rate and the internal resistance increase rate are called "SOH (State of Health)" collectively.

Progress of the storage battery deterioration differs depending on each cell. This is attributable to the chemical reaction in association with the power storage operation. For example, when variation occurs in each progress of deterioration in the plurality of storage battery cells that constitute the single series connection, the performance of the series-connected storage batteries is determined by the storage battery cell with the highest deterioration level. Concerning the capacity decline, the current flow through the single series connection is the same as the one in the respective storage battery cells. The electrical charge to be stored in other storage battery cells cannot exceed the capacity of the storage battery cell with the lowest capacity maintenance rate. As a result, the entire charging/discharging capacity of the single series-connected storage battery cells becomes apparently small. Concerning the internal resistance increase, the current flow through the single series is the same as the one in the respective storage battery cells. The voltage rise/drop of the storage battery cell with the highest internal resistance increase rate becomes the largest. The voltage that reaches the cell allowable voltage (maximum/minimum) restricts the entire charging/discharging current of the single series-connected storage battery cells.

As described above, the aging performance of the storage battery cell can be stabilized by reducing the difference in the deterioration progress as small as possible. This applies to the storage battery modules.

A prior art example is configured to have a plurality of secondary batteries each having the charging/discharging state controlled independently, and a fuel cell connected to the secondary batteries so as to be charged. This example allows the control operation only for the single series unit. If a plurality of storage battery modules constitute the single series unit, operations for charging/discharging each of the storage battery modules cannot be controlled. That is, the control operation for the single series cannot equalize the deterioration state of the plurality of storage battery modules constituting the single series unit.

Meanwhile, the embodiment quantifies variation in each deterioration state of the storage battery modules that constitute the storage battery system to recombine the storage battery modules each in a similar deteriorated state. This makes it possible to provide the storage battery management device, storage battery management method, and the storage battery management system, which allow improvement in the aging performance as the storage battery system.

In the embodiment, the storage battery module is used as the final replacement unit for recombination. However, the storage battery unit may be used as the final replacement unit for recombination. The plurality of storage battery units are mounted in the storage battery system (storage battery box) in the real vehicle replaceably, and the plurality of storage battery modules are mounted in the storage battery unit replaceably. However, the plurality of storage battery modules may be directly mounted in the storage battery system of the real vehicle replaceably.

The above-described processing to be executed by the storage battery data management unit 18 is implemented in collaboration with resources of software and hardware. That is, the processor in the computer provided for the storage battery data management unit 18 loads the software to implement the respective functions in the memory, and attains the respective functions.

The embodiments have been described above. However, the technical scope of the present invention is not limited to the above-described embodiments. It is clear from the description of claims that various changes or modifications to the embodiments may also be contained within the technical scope of the present invention.

List of Reference Signs

11: real vehicle, 13: real vehicle control section, 15: rail, 16: power supply section, 17: route, 18: storage battery data management unit, 31: wide area information transmission path, 32a: wide area information transmission and reception section, 34: local area information transmission path, 35a: local information transmission and reception section, 36: local area information transmission and reception base, 111: current collector, 117: traction motor, 118: auxiliary device, 121: traction transformer, 122: drive control section, 122a: AC/DC converter, 122b: DC/AC inverter, 123,123a,123b,123c: storage battery system, 124: auxiliary power supply, 131: AC voltage detector (ACPT), 132: AC current detector (ACCT), 133: DC voltage detector (DCPT), 134: DC current detector, 135: DC voltage detector, 141: train information control device, 141a: controller, 141b: router (Router), 142a: AC/DC converter control section, 142b: DC/AC inverter control section, 143: storage battery control device, 144: auxiliary power supply control device, 150: display (Display), 160: antenna (Antenna), 181: data analysis unit, 181a: simulation vehicle unit, 181b: storage battery recombination determination, 182: module recombination plan, 183: optimization of control parameter

**Claims**

1. A management device for a railway storage battery, the management device managing a plurality of storage battery unit elements replaceably mounted on a railway vehicle, comprising:

   an in-operation storage battery information acquisition unit for acquiring information relating to deterioration levels of the plurality of storage battery unit elements mounted on the railway vehicle in operation;
   an in-storage storage battery information acquisition unit for acquiring information relating to deterioration levels of the plurality of storage battery unit elements stored outside the railway vehicle; and
   a storage battery management information display unit for displaying information relating to the deterioration levels of the plurality of storage battery unit elements in operation and in storage.

2. The management device for the railway storage battery according to claim 1, wherein the storage battery unit elements in storage are new or maintained storage battery unit elements.

3. The management device for the railway storage battery according to claim 1 or 2, wherein the storage battery management information display unit displays present and future estimated SOHs of the plurality of storage battery unit elements.

4. The management device for the railway storage battery according to any one of claims 1 to 3, wherein the storage battery management information display unit displays information relating to variation in the deterioration levels of the plurality of storage battery unit elements.

5. The management device for the railway storage battery according to claim 4, wherein the storage battery management information display unit displays a rank of the deterioration level of the storage battery unit element.

6. The management device for the railway storage battery according to any one of claims 1 to 5, wherein the storage battery management information display unit displays a replacement plan for the plurality of storage battery unit elements to reduce variations in the deterioration levels of the plurality of storage battery unit elements mounted on a specific railway vehicle.

7. The management device for the railway storage battery according to any one of claims 1 to 6, wherein the storage battery management information display unit displays a replacement plan for the plurality of storage battery unit elements to replace the storage battery unit element at a relatively high deterioration level with a new or a maintained storage battery unit element.

8. The management device for the railway storage battery according to any one of claims 1 to 7, wherein the storage battery management information display unit displays a replacement plan for the plurality of storage battery unit elements to allow to be mounted on the same storage battery system, the storage battery unit elements each with the same rank or with adjacent ranks, indicating the information relating to the variation in the deterioration levels of the storage battery unit elements.

9. The management device for the railway storage battery according to any one of claims 1 to 8, wherein the storage battery management information display unit displays a control change plan for changing control operations of the storage battery system comprised of the plurality of storage battery unit elements, together with the replacement plan for the plurality of storage battery unit elements.

10. The management device for the railway storage battery according to any one of claims 1 to 9, wherein the storage battery management information display unit displays a control change plan for changing control operations of a drive system that drives with power from the plurality of storage battery unit elements, together with the replacement plan for the plurality of storage battery unit elements.

11. The management device for the railway storage battery according to any one of claims 1 to 10, wherein the storage battery management information display unit displays a replacement plan for the plurality of storage battery unit elements before one of the plurality of storage battery unit elements mounted on the specific railway vehicle reaches a predetermined deterioration level.

12. The management device for the railway storage battery according to any one of claims 1 to 11, wherein the storage battery management information display unit displays a circulation plan for recycling the storage battery unit element replaced from the railway vehicle into a material for a storage battery.

13. The management device for the railway storage battery according to any one of claims 1 to 12, wherein the storage battery management information display unit displays a circulation plan for mounting the storage battery unit element replaced from the railway vehicle on a railway vehicle on another route.

14. The management device for the railway storage battery according to any one of claims 1 to 13, wherein the storage battery management information display unit displays information relating to temperatures of the plurality of storage battery unit elements in operation.

15. The management device for the railway storage battery according to any one of claims 1 to 14, wherein the storage battery management information display unit displays a replacement plan for the plurality of storage battery unit elements to reduce the variations in the deterioration levels of the plurality of storage battery unit elements mounted on the specific railway vehicle based on the information relating to the temperatures of the plurality of storage battery unit elements in operation.

16. The management device for the railway storage battery according to any one of claims 1 to 15, wherein the storage battery management information display unit displays a replacement plan for the plurality of storage battery unit elements to bring the storage battery unit element that has been positioned at a relatively high in-operation temperature into a position estimated to be at a relatively low in-operation temperature.

17. The management device for the railway storage battery according to any one of claims 1 to 16, wherein the storage battery unit element is a storage battery module to be stored in a storage battery unit mounted in a storage battery box of the railway vehicle.

18. The management device for the railway storage battery according to any one of claims 1 to 17, wherein a digital twin is used for predicting information relating to a future deterioration level of the storage battery unit element.

19. A management method for a railway storage battery for managing a plurality of storage battery unit elements replaceably mounted on a railway vehicle, comprising:

causing the railway vehicle having the plurality of storage battery unit elements replaceably mounted thereon to transmit information relating to deterioration levels of the plurality of storage battery unit elements,
causing a management device for the railway storage battery to acquire information relating to deterioration levels of the plurality of storage battery unit elements mounted on the railway vehicle in operation;
causing an in-storage storage battery information transmission unit to transmit information relating to deterioration levels of the plurality of storage battery unit elements stored outside the railway vehicle;
causing the management device for the railway storage battery to acquire information relating to the deterioration levels of the plurality of storage battery unit elements stored outside the railway vehicle; and
causing the management device for the railway storage battery to display information relating to the deterioration levels of the plurality of storage battery unit elements in operation and in storage.

20. A management system for a railway storage battery comprising:

a railway vehicle that has a plurality of storage battery unit elements replaceably mounted thereon, and transmits information relating to deterioration levels of the plurality of storage battery unit elements in operation;
an in-storage storage battery information transmission unit that transmits information relating to deterioration levels of a plurality of storage battery unit elements stored outside the railway vehicle; and
a management device for the railway storage battery having: an in-operation storage battery information acquisition unit for acquiring information relating to deterioration levels of the plurality of storage battery unit elements mounted on the railway vehicle in operation; an in-storage storage battery information acquisition unit for acquiring information relating to the deterioration levels of the plurality of storage battery unit elements stored outside the railway vehicle; and a storage battery management information display unit for displaying information relating to the deterioration levels of the plurality of storage battery unit elements in operation and in storage.

# FIG. 1

STORAGE BATTERY DATA MANAGEMENT UNIT

OPERATOR

RAILWAY COMPANY (OPERATION DEPARTMENT) TO WHICH STORAGE BATTERY IS APPLIED

STABLE OPERATION OF STORAGE BATTERY

MAINTENANCE AND REPLACEMENT OF UNIT

APPLICATION OF STORAGE BATTERY

REMOVAL/ CARRY-OUT

CARRY-IN/ MOUNT

OPERATION DATA

QUALITY DATA

RESPONSE ABOUT DATE AND TIME

MAINTENANCE PROPOSAL

CONFIRMATION OF RESULT

UNIT EXAMINATION RESULT

STORAGE BATTERY DATA MANAGER

UNIT COLLECTED FOR MAINTENANCE AND COLLECTION

MAINTENANCE COMPLETED UNIT

COLLECTION OF UNIT

SUPPLY OF UNIT

INSTRUCTION OF UNIT MAINTENANCE

UNIT EXAMINATION RESULT

MODULE SPECIFICATION

ANALYSIS REPORT

UNIT SPECIFICATION

ANALYSIS REPORT

RECORD OF UNIT

ANALYSIS REPORT

RECYCLE OF MODULE

SUPPLY OF MODULE

ASSEMBLY OF UNIT

SUPPLY OF UNIT

UPCYCLE OF STORAGE BATTERY MODULE

PRODUCTION OF STORAGE BATTERY UNIT

STORAGE BATTERY HARDWARE MAINTENANCE

RECYCLE INTO CELL MATERIAL

COLLECTION OF MODULE

DISASSEMBLY OF UNIT

COLLECTION OF UNIT

STORAGE BATTERY HARDWARE MANAGEMENT

STORAGE BATTERY HARDWARE SUPPLIER

SUPPLY OF UNIT FOR MAINTENANCE

COLLECTION OF UNIT FOR MAINTENANCE

STORAGE BATTERY HARDWARE MAINETNANCE OPERATOR

STORAGE BATTERY HARDWARE MANAGER

EP 4 775 442 A1

# FIG. 2

DEPENDING ON DATA TYPE, CHANGE PLACE AND TIME FOR COLLECTION
DETAILED DATA : SPECIFIC PLACE AND SPECIFIC TIME FOR COLLECTION
OUTLINE DATA: CONTINUOUS MONITORING

31

WIDE-AREA INFORMATION COMMUNICATION UNIT ~32a

33

181  182  18  17a  17b  17c

STORAGE BATTERY DATA MANAGEMENT UNIT

DATA ANALYSIS UNIT

MODULE RECOMBINATION PLAN

MAINTENANCE INSTRUCTION

ROUTE (DEPOT)

11a  11b  16  11c  11d  11e

RECEIVED DATA

SIMULATION VEHICLE UNIT

STORAGE BATTERY RECOMBINATION DETERMINATION

OPTIMIZATION OF CONTROL PARAMETER

SOFTWARE TRANSMISSION

15

ROUTE (ELECTRIFIED)

ROUTE (NON-ELECTRIFIED)

181a  181b  183

36  36  36

LOCAL INFORMATION TRANSMISSION AND RECEPTION SECTION ~35a

LOCAL INFORMATION TRANSMISSION AND RECEPTION SECTION ~35a

LOCAL INFORMATION TRANSMISSION AND RECEPTION SECTION

35a

34  34

WIDE AREA INFORMATION TRANSMISSION AND RECEPTION SECTION ~32a

31

EP 4 775 442 A1

# FIG.3

EP 4 775 442 A1

# FIG. 4

STORAGE BATTERY SYSTEM
(STORAGE BATTERY BOX)

CURRENT
DETECTION UNIT

STORAGE
BATTERY UNIT

CURRENT
CONTROL
UNIT

CONTROLLER

MODULE

MODULE

MODULE

MODULE

MODULE

MODULE

MODULE

MODULE

DC
PT

MODULE

MODULE

MODULE

MODULE

U

U

# FIG. 5

(a)

(b)

[REQUIRED DATA]

| No. | ITEMS | REMARKS |
|---|---|---|
| 1 | TAG INFORMATION (MODEL, SERIAL NO.) | PERIODICAL TRANSMISSION |
| 2 | UNIT SOH | INTERVAL OF 1 SECOND |
| 3 | MODULE SOH | |
| 4 | UNIT VOLTAGE | |
| 5 | UNIT CURRENT | |
| 6 | MODULE VOLTAGE | |
| 7 | MODULE CURRENT | |
| 8 | CELL VOLTAGE | |
| 9 | CELL CURRENT | |
| 10 | CELL/MODULE TEMPERATURE | |

(c)

[REQUIRED DATA]

| No. | ITEMS | REMARKS |
|---|---|---|
| 1 | TAG INFORMATION (MODEL, SERIAL NO.) | ON DEMAND |
| 2 | UNIT VOLTAGE | |
| 3 | MODULE VOLTAGE | |
| 4 | CELL VOLTAGE | |
| 5 | CELL/MODULE TEMPERATURE | |

EP 4 775 442 A1

# FIG. 6

ID : A-U1, STORAGE BATTERY UNIT, BTUT23
α HISTORY INFORMATION
  SIZE, MASS, PROPERTY, USAGE STATUS HISTORY, SERIAL NO.
β UPPER-LEVEL COMPONENT (PARENT)
  (ID : 1) STORAGE BATTERY SYSTEM, BTSY23
γ LOWER-LEVEL COMPONENT (CHILD)
  (ID : A-U1-MD11) STORAGE BATTERY MODULE
  (ID : A-U1-MD12) STORAGE BATTERY MODULE
  (ID : A-U1-MD21) STORAGE BATTERY MODULE
δ ASSOCIATED DATA
  SIZE : Data_BTUT23_size
  MASS : Data_BTUT23_mass
  PROPERTY : Data_BTUT23_chara
  USAGE HISTORY : Data_BTUT23_UsageHist

ID : A
STORAGE BATTERY
SYSTEM
MODEL : BTSY23
α
β
γ
δ

ID : A-U1
STORAGE BATTERY UNIT
MODEL : BTUT23
α
β
γ
δ

ID : A-U2
STORAGE BATTERY UNIT
MODEL : BTUT23
α
β
γ
δ

ID : A-U3
STORAGE BATTERY UNIT
MODEL : BTUT23
α
β
γ
δ

ID : A-U1-MD11
STORAGE BATTERY
MODULE
MODEL : MT60HE
α
β
γ
δ

ID : A-U1-MD12
STORAGE BATTERY
MODULE
MODEL : MT60HE
α
β
γ
δ

ID : A-U1-MD21
STORAGE BATTERY
MODULE
MODEL : MT60HE
α
β
γ
δ

ID : A-U2-MD11
STORAGE BATTERY
MODULE
MODEL : MT60HE
α
β
γ
δ

ID : A-U2-MD12
STORAGE BATTERY
MODULE
MODEL : MT60HE
α
β
γ
δ

ID : A-U2-MD21
STORAGE BATTERY
MODULE
MODEL : MT60HE
α
β
γ
δ

ID : A-U3-MD11
STORAGE BATTERY
MODULE
MODEL : MT60HE
α
β
γ
δ

EP 4 775 442 A1

# FIG. 7

ID : *-MD11
STORAGE BATTERY
MODULE
MODEL : MT60HE
α
β
γ
δ

ID : *-MD11, MT60HE
α HISTORY INFORMATION
  SIZE, MASS, PROPERTY,
  USAGE STATUS HISTORY, SERIAL NO.
β UPPER-LEVEL COMPONENT (PARENT)
  (ID : 1) STORAGE BATTERY UNIT, BTU23
γ LOWER-LEVEL COMPONENT (CHILD)
  (ID : *-MD11-1) MODULE CASE, ABC TYPE
  (ID : *-MD11-2) Li-ION BATTERY CELL, DEF TYPE
  (ID : *-MD11-3) CELL CONTROLLER, GHI TYPE
δ ASSOCIATED DATA
  SIZE : Data_MT60HE_size
  MASS : Data_MT60HE_mass
  PROPERTY : Data_MT60HE_chara
  USAGE HISTORY : Data_MT60HE_UsageHist

ID : *-MD11-2, Li-ION BATTERY CELL ABC TYPE
α HISTORY INFORMATION
  SIZE, MASS, PROPERTY,
  USAGE STATUS HISTORY, SERIAL NO.
β UPPER-LEVEL COMPONENT (PARENT)
  (ID : 1) STORAGE BATTERY MODULE OF 2022 MODEL YEAR
γ LOWER-LEVEL COMPONENT (CHILD)
  (ID : 1-1-1) CELL CASE, Al,
  (ID : 1-1-2) MATERIAL FOR POSITIVE ELECTRODE, LiCoO2, 3g
  (ID : 1-1-3) MATERIAL FOR NEGATIVE ELECTRODE, C(GRAPHITE), 2g
δ ASSOCIATED DATA
  SIZE : Data_ID1_size
  MASS : Data_ID1_mass
  PROPERTY : Data_ID1_chara
  USAGE HISTORY : Data_ID1_UsageHist

ID : *-MD11-1
MODULE CASE
ABC TYPE
α
β
γ
δ

ID : *-MD11-2
Li-ION BATTERY CELL
DEF TYPE
α
β
γ
δ

ID : *-MD11-3
CELL CONTROLLER
ABC TYPE
α
β
γ
δ

ID : *-MD11-2-1
α
β
γ
δ

ID : *-MD11-2-2
α
β
γ
δ

ID : *-MD11-2-3
α
β
γ
δ

ID : *-MD11-1-1
CELL CASE
α
β
γ
δ

ID : *-MD11-1-2
MATERIAL FOR
POSITIVE ELECTRODE
α
β
γ
δ

ID : *-MD11-1-3
MATERIAL FOR
NEGATIVE ELECTRODE
α
β
γ
δ

ID : *-MD11-3-1
α
β
γ
δ

# FIG. 8

| NO. | INSTRUCTION OBJECT MEMBER | TEMPORAL POSITION | | SPATIAL POSITION | | | | | ID OF INSTRUCTION OBJECT MEMBER |
|---|---|---|---|---|---|---|---|---|---|
| | | DATE | TIME | TRAIN SET | BOX | UNIT | MODULE | CELL | |
| 1 | BOX | 20230623 | 1517 | L1 | A | | | | (20230623-1517)L1-A |
| 2 | UNIT | | | | | U1 | | | (20230623-1517)L1-A-U1 |
| 3 | MODULE | | | | | | MD11 | | (20230623-1517)L1-A-U1-MD11 |
| 4 | CELL | | | | | | | 2 | (20230623-1517)L1-A-U1-MD11-2 |

EP 4 775 442 A1

# FIG. 9

STEP1

| OPERATOR | | STORAGE BATTERY HARDWARE MAINTENANCE OPERATOR | STORAGE BATTERY DATA MANAGER |

① OPERATION DATA TRANSMISSION

TRAIN | BATTERY BOX-A | BATTERY BOX-B | BATTERY BOX-C

| UNIT-1 | UNIT-2 | UNIT-1 | UNIT-2 | UNIT-1 | UNIT-2 |
| UNIT-3 | ... | UNIT-3 | ... | UNIT-3 | ... |

⑤ PROPOSAL OF MAINTENANCE AND REPLACEMENT

UNIT FOR MANAGING MAINTENANCE UNIT

③ INSTRUCTION OF MAINTENANCE AND REPLACEMENT

STORAGE BATTERY DATA MANAGEMENT UNIT

② OPERATION DATA ANALYSIS

④ CONFIRM BACKUP UNIT

---

STEP2

TRAIN | BATTERY BOX-A | BATTERY BOX-B | BATTERY BOX-C

| UNIT-1 | UNIT-2 | UNIT-1 | UNIT-2 | UNIT-1 | UNIT-2 |
| UNIT-3 | ... | UNIT-3 | ... | UNIT-3 | ... |

④ UNIT REPLACEMENT

① RESPONSE ABOUT DATE AND TIME FOR REPLACEMENT

UNIT FOR MANAGING MAINTENANCE UNIT

② PREPARATION OF BACKUP UNIT

STORAGE BATTERY DATA MANAGEMENT UNIT

③ SENDING OF BACKUP UNIT

---

STEP3

TRAIN | BATTERY BOX-A | BATTERY BOX-B | BATTERY BOX-C

| UNIT-1 | UNIT-2 | UNIT-1 | UNIT-2 | UNIT-1 | UNIT-2 |
| UNIT-3 | ... | UNIT-3 | ... | UNIT-3 | ... |

③ REPORT OF EXAMINATION RESULT

⑤ RECORD OF COMPLETION OF MAINTENANCE AND REPLACEMENT

UNIT FOR MANAGING MAINTENANCE UNIT

④ CONFIRMATION OF EXAMINATION RESULT

② EXAMINATION OF REPLACEMENT UNIT

STORAGE BATTERY DATA MANAGEMENT UNIT

① RETURN OF REPLACEMENT UNIT

EP 4 775 442 A1

# FIG. 10

MAINTAINED STORAGE BATTERY UNIT

REPLACEMENT OF STORAGE BATTERY

| TRAIN1 | BATTERY BOX-A | | BATTERY BOX-B | | BATTERY BOX-C | |
|---|---|---|---|---|---|---|
| | UNIT-1 | UNIT-2 | UNIT-1 | UNIT-2 | UNIT-1 | UNIT-2 |
| | UNIT-3 | ... | UNIT-3 | ... | UNIT-3 | ... |

MAINTAINED STORAGE BATTERY UNIT

RECOMBINATION     RANKING BASED ON STORAGE BATTERY INFORMATION     (STOCK, NEW ITEM)

REPLACEMENT OF STORAGE BATTERY

| TRAIN2 | BATTERY BOX-A | | BATTERY BOX-B | | BATTERY BOX-C | |
|---|---|---|---|---|---|---|
| | UNIT-1 | UNIT-2 | UNIT-1 | UNIT-2 | UNIT-1 | UNIT-2 |
| | UNIT-3 | ... | UNIT-3 | ... | UNIT-3 | ... |

MAINTAINED STORAGE BATTERY UNIT

RECOMBINATION     RANKING BASED ON STORAGE BATTERY INFORMATION     (STOCK, NEW ITEM)

REPLACEMENT OF STORAGE BATTERY

| TRAIN3 | BATTERY BOX-A | | BATTERY BOX-B | | BATTERY BOX-C | |
|---|---|---|---|---|---|---|
| | UNIT-1 | UNIT-2 | UNIT-1 | UNIT-2 | UNIT-1 | UNIT-2 |
| | UNIT-3 | ... | UNIT-3 | ... | UNIT-3 | ... |

MAINTAINED STORAGE BATTERY UNIT

RECOMBINATION     RANKING BASED ON STORAGE BATTERY INFORMATION     (STOCK, NEW ITEM)

EP 4 775 442 A1

# FIG. 11

STORAGE BATTERY DATA MANAGER  STORAGE BATTERY HARDWARE MAINTENANCE OPERATOR  OPERATOR

S102
ANALYZE OPERATION DATA

S101
OPERATE STORAGE BATTERY

S103
GIVE INSTRUCTION OF MAINTENANCE AND REPLACEMENT, GIVE INSTRUCTION OF PREPARING REPLACEMENT/BACKUP UNIT

S104
OFFER MAINTENANCE AND REPLACEMENT PROPOSAL TO CLIENT

S105
SET DATE AND TIME FOR REPLACEMENT

S107
CONFIRM DATE AND TIME FOR REPLACEMENT

S106
RESPOND ABOUT DATE AND TIME FOR REPLACEMENT

S108
SEND BACKUP UNIT TO CLIENT

S109
RECEIVE BACKUP UNIT

S110
REMOVE REPLACEMENT UNIT, MOUNT BACKUP UNIT

S112
RECEIVE REPLACEMENT UNIT

S111
RETURN REPLACEMENT UNIT

S113
EXAMINE REPLACEMENT UNIT, REPORT RESULT

S114
CONFIRM EXAMINATION RESULT

S117
RECORD COMPLETION OF MAINTENANCE AND REPLACEMENT

S116
COMPLETION OF MAINTENANCE AND REPLACEMENT

S115
ACCEPT EXAMINATION RESULT (COMPLETION OF OPERATION)

S118
GIVE INSTRUCTION OF MODULE REPLACEMENT

S119
CONFIRM INSTRUCTION OF MODULE REPLACEMENT

S120
REPLACE MODULE AND INSPECT UNIT

S122
RECORD COMPLETION OF STORAGE

S121
COMPLETTION OF MODULE REPLACEMENT

☐ : ACCESS TO STORAGE BATTERY DATA MANAGEMENT UNIT

FIG. 12

FIG. 12

OPERATE STORAGE BATTERY — S101

S102

ANALYSIS OF OPERATION DATA

COLLECT DATA (SOHq, SOHr) FROM VEHICLE OPERATION

S201

DIGITAL TWIN

DATA MANAGEMENT

DATA ANALYSIS

DATA DETERMINATION

IDENTIFY STORAGE BATTERY MODEL — S202
IDENTIFY VEHICLE MODEL — S203

PREDICT PERFORMANCE DETERIORATION — S204

ALL DATA ARE WITHIN A RANGE OF DETERMINATION VALUE

CALCULATE STANDARD DEVIATION OF SOH — S205
CALCULATE STANDARD DEVIATION OF SOH — S208

ALL DATA ARE WITHIN A RANGE OF DETERMINATION VALUE

DETERMINE BASED ON STANDARD DEVIATION — S206
DETERMINE BASED ON STANDARD DEVIATION — S209

EXISTENCE OF DATA OUTSIDE THE RANGE OF DETERMINATION VALUE

EXISTENCE OF DATA OUTSIDE THE RANGE OF DETERMINATION VALUE

ANALYZE DISTRIBUTION OF SOH DATA (FUTURE) — S207
ANALYZE DISTRIBUTION OF SOH DATA (PRESENT) — S210

DETERMINE PERFORMANCE DETERIORATION OF STORAGE BATTERY MODULE (A/B/C) — S211

RECOMBINE STORAGE BATTERY MODULES ON TRIAL (SIMULATION) — S212

MAKE A PLAN FOR RECOMBINING STORAGE BATTERY MODULES — S213

GIVE INSTRUCTION OF MAINTENANCE AND REPLACEMENT, GIVE INSTRUCTION OF PREPARING REPLACEMENT/BACKUP UNIT — S103

EP 4 775 442 A1

# FIG. 13

GIVE INSTRUCTION OF MODULE REPLACEMENT —S118

S119

STORAGE BATTERY DATA MANAGEMENT UNIT — 18

CALL ANALYSIS RESULT (RECOMBINATION PLAN) —S301

CONFIRM LOCATION OF RECOMBINED MODULE —S302

CORRECT RECOMBINATION PLAN —S304

VIRTUALLY RECOMBINE MODULES —S303   (NOT ESTABLISHED)

(ESTABLISHED)

S120

STORAGE BATTERY DATA MANAGEMENT UNIT — 18

PERFORM RECOMBINATION —S305

RECORD POSITION AFTER RECOMBINATION —S306

PLAN FOR CORRECTING RECOMBINATION —S308

CONSISTENCY WITH RECOMBINATION PLAN —S307   (NG)

(OK)

COMPLETION OF MODULE REPLACEMENT —S121

EP 4 775 442 A1

# FIG. 14

EP 4 775 442 A1

# FIG. 15A

(a)

CAPACITY MAINTENANCE RATE [%]

100%

PROPERTY B
PROPERTY A
PROPERTY C

YEARS OF SERVICE

(b)

PROBABILITY DENSITY

0.3

0.2

0.1

0

AGING

① ② ③ ④ ⑤

0 10 20 30 40 50 60 70 80 90 100 110 120 130 140 150

CAPACITY MAINTENANCE RATE [%]

# FIG. 15B

# FIG. 16

## FIG. 17

| LINE NO. | TRAIN SET | BOX | UNIT | MODULE | OPERATION STARTING DATE | OPERATING PERIOD | DOWNTIME | SOH | STD DEV | DETERMINATION | SOH | STD DEV | DETERMINATION | SOH | STD DEV | DETERMINATION | A/B/C | TRAIN SET | BOX | UNIT | MODULE | SOH | STD DEV |
|---|---|---|---|---|---|---|---|---|---|---|---|---|---|---|---|---|---|---|---|---|---|---|---|
| | | OPERATIONAL EQUIPMENT | | | OPERATION HISTORY DATA | | | SOH MEASUREMENT DATA (PRESENT) | | | SOH PREDICTED DATA — TIME FOR NEXT MAINTENANCE | | | TIME FOR MAINTENANCE AFTER THE NEXT MAINTENANCE | | | CLASSIFICATION | CANDIDATE FOR REPLACEMENT OF STORAGE BATTERY (AFTER NEXT MAINTENANCE) | | | | PREDICTED DATA AFTER REPLACEMENT | |
| 1 | | | UNIT-1 | MD11 | 23/1/1 | 0.5 | 0.08 | 96 | | | 88 | | | 70 | | × | C | G1 | A | UNIT-1 | MD11 | 98 | |
| 2 | | | | MD12 | 23/1/1 | 0.5 | 0.08 | 98 | | | 97 | | | 85 | | | B | G1 | A | UNIT-1 | MD12 | 98 | |
| 3 | | | | MD21 | 23/1/1 | 0.5 | 0.08 | 98 | | | 97 | | | 85 | | | B | G1 | A | UNIT-1 | MD21 | 98 | |
| 4 | | | | MD22 | 23/1/1 | 0.5 | 0.08 | 98 | | | 97 | | | 85 | | | B | G1 | A | UNIT-1 | MD22 | 98 | |
| 5 | | | UNIT-2 | MD11 | : | : | : | : | | : | : | | : | : | | : | : | : | : | : | : | : | |
| 6 | | | | MD12 | | | | | | | | | | | | | | | | | | | |
| 7 | | | | MD21 | | | | | | | | | | | | | | | | | | | |
| 8 | | | | MD22 | | | | | | | | | | | | | | | | | | | |
| 9 | | | UNIT-3 | MD11 | | | | | | | | | | | | | | | | | | | |
| 10 | L2 | A | | MD12 | | | | 2.2 | | | 3.3 | | | 5.0 | | | | | | | | 1.0 | |
| 11 | | | | MD21 | | | | | | | | | | | | | | | | | | | |
| 12 | | | | MD22 | | | | | | | | | | | | | | | | | | | |
| 13 | | | UNIT-4 | MD11 | | | | | | | | | | | | | | | | | | | |
| 14 | | | | MD12 | | | | | | | | | | | | | | | | | | | |
| 15 | | | | MD21 | | | | | | | | | | | | | | | | | | | |
| 16 | | | | MD22 | | | | | | | | | | | | | | | | | | | |
| 17 | | | UNIT-5 | MD11 | | | | | | | | | | | | | | | | | | | |
| 18 | | | | MD12 | | | | | | | | | | | | | | | | | | | |
| : | | | : | : | | | | : | | | : | | | | | | | | | : | : | : | |
| 64 | | | UNIT-16 | MD22 | | | | | | | | | | | | | | | | | | | |

EP 4 775 442 A1

# FIG. 18

| LINE NO. | STOCK FOR MAINTENANCE | | | | OPERATION HISTORY DATA | | | SOH DATA OF STOCK | | | | | | | | | CLASSIFICATION | CANDIDATE AFTER RECOMBINATION (AFTER NEXT MAINTENANCE) | | | | PREDICTED DATA AFTER RECOMBINATION | |
|---|---|---|---|---|---|---|---|---|---|---|---|---|---|---|---|---|---|---|---|---|---|---|---|
| | | | | | | | | STORAGE STARTING TIME | | | PRESENT | | | TIME FOR NEXT MAINTENANCE | | | | | | | | | |
| | TRAIN SET | BOX | UNIT | MODULE | OPERATION STARTING DATE | OPERATING PERIOD | DOWNTIME | SOH | STANDARD DEVIATION | DETERMINATION | SOH | STANDARD DEVIATION | DETERMINATION | SOH | STANDARD DEVIATION | DETERMINATION | A/B/C | TRAIN SET | BOX | UNIT | MODULE | SOH | STANDARD DEVIATION |
| 1 | | | UNIT-1 | MD11 | 23/2/1 | 0.42 | 0.42 | 100 | | | 98 | | | 97 | | | B | L2 | B | UNIT-1 | MD11 | 97 | |
| 2 | | | | MD12 | 23/2/1 | 0.42 | 0.42 | 100 | | | 98 | | | 97 | | | B | L2 | B | UNIT-2 | MD11 | 97 | |
| 3 | | | | MD21 | 23/2/1 | 0.42 | 0.42 | 100 | | | 98 | | | 97 | | | B | L2 | A | UNIT-5 | MD21 | 97 | |
| 4 | | | | MD22 | 23/2/1 | 0.42 | 0.42 | 100 | | | 98 | | | 97 | | | B | L2 | C | UNIT-2 | MD12 | 97 | |
| 5 | | | UNIT-2 | MD11 | : | : | : | : | | : | : | | | : | | | : | : | : | : | : | : | |
| 6 | | | | MD12 | | | | | | | | | | | | | | | | | | | |
| 7 | | | | MD21 | | | | | | | | | | | | | | | | | | | |
| 8 | | | | MD22 | | | | | | | | | | | | | | | | | | | |
| 9 | | | UNIT-3 | MD11 | | | | | | | | | | | | | | | | | | | |
| 10 | STOCK G1 | A | | MD12 | | | | | 0 | | | | | | 0.5 | | | | | | | | 1.0 |
| 11 | | | | MD21 | | | | | | | | | | | | | | | | | | | |
| 12 | | | | MD22 | | | | | | | | | | | | | | | | | | | |
| 13 | | | UNIT-4 | MD11 | | | | | | | | | | | | | | | | | | | |
| 14 | | | | MD12 | | | | | | | | | | | | | | | | | | | |
| 15 | | | | MD21 | | | | | | | | | | | | | | | | | | | |
| 16 | | | | MD22 | | | | | | | | | | | | | | | | | | | |
| 17 | | | UNIT-5 | MD11 | | | | | | | | | | | | | | | | | | | |
| 18 | | | | MD12 | | | | | | | | | | | | | | | | | | | |
| : | | | : | : | | | | : | | | : | | | | | | | : | | | : | : | |
| 64 | | | UNIT-16 | MD22 | | | | | | | | | | | | | | | | | | | |

EP 4 775 442 A1

## FIG. 19

| LINE NO. | STORAGE BATTERY ADDRESS (ADDRESS AFTER REPLACEMENT) | | | | LOCATION OF REPLACEMENT MODULE (ADDRESS BEFORE REPLACEMENT) | | | | CONFIRMATION OF RESULT | |
|---|---|---|---|---|---|---|---|---|---|---|
| | TRAIN SET | BOX | UNIT | MODULE | TRAIN SET | BOX | UNIT | MODULE | STATUS | CONFIRMATION |
| 1 | L2 | A | UNIT-1 | MD11 | G1 | A | UNIT-1 | MD11 | READY | OK |
| 2 | | | | MD12 | G1 | A | UNIT-1 | MD12 | READY | OK |
| 3 | | | | MD21 | G1 | A | UNIT-1 | MD21 | READY | OK |
| 4 | | | | MD22 | G1 | A | UNIT-1 | MD22 | READY | OK |
| 5 | | | UNIT-2 | MD11 | : | : | : | : | : | : |
| 6 | | | | MD12 | | | | | | |
| 7 | | | | MD21 | | | | | | |
| 8 | | | | MD22 | | | | | | |
| 9 | | | UNIT-3 | MD11 | | | | | | |
| 10 | | | | MD12 | | | | | | |
| 11 | | | | MD21 | | | | | | |
| 12 | | | | MD22 | | | | | | |
| 13 | | | UNIT-4 | MD11 | | | | | | |
| 14 | | | | MD12 | | | | | | |
| 15 | | | | MD21 | | | | | | |
| 16 | | | | MD22 | | | | | | |
| 17 | | | UNIT-5 | MD11 | | | | | | |
| 18 | | | | MD12 | | | | | | |
| : | | | : | : | : | : | : | : | : | : |
| 64 | | | UNIT-16 | MD22 | | | | | | |

EP 4 775 442 A1

# FIG. 20

| LINE NO. | STORAGE BATTERY ADDRESS (ADDRESS AFTER REPLACEMENT) | | | | LOCATION OF REPLACEMENT MODULE (ADDRESS BEFORE REPLACEMENT) | | | | RECORD OF POSITION AFTER REPLACEMENT | | | | CONFIRMATION OF RESULT | |
|---|---|---|---|---|---|---|---|---|---|---|---|---|---|---|
| | TRAIN SET | BOX | UNIT | MODULE | TRAIN SET | BOX | UNIT | MODULE | TRAIN SET | BOX | UNIT | MODULE | STATUS | CONFIRMATION |
| 1 | L2 | A | UNIT-1 | MD11 | G1 | A | UNIT-1 | MD11 | G1 | A | UNIT-1 | MD11 | COMPLETION OF INCORPORATION | OK |
| 2 | | | | MD12 | G1 | A | UNIT-1 | MD12 | G1 | A | UNIT-1 | MD12 | COMPLETION OF INCORPORATION | OK |
| 3 | | | | MD21 | G1 | A | UNIT-1 | MD21 | G1 | A | UNIT-1 | MD21 | COMPLETION OF INCORPORATION | OK |
| 4 | | | | MD22 | G1 | A | UNIT-1 | MD22 | G1 | A | UNIT-1 | MD22 | COMPLETION OF INCORPORATION | OK |
| 5 | | | UNIT-2 | MD11 | : | : | : | : | : | : | : | : | : | : |
| 6 | | | | MD12 | | | | | | | | | | |
| 7 | | | | MD21 | | | | | | | | | | |
| 8 | | | | MD22 | | | | | | | | | | |
| 9 | | | UNIT-3 | MD11 | | | | | | | | | | |
| 10 | | | | MD12 | | | | | | | | | | |
| 11 | | | | MD21 | | | | | | | | | | |
| 12 | | | | MD22 | | | | | | | | | | |
| 13 | | | UNIT-4 | MD11 | | | | | | | | | | |
| 14 | | | | MD12 | | | | | | | | | | |
| 15 | | | | MD21 | | | | | | | | | | |
| 16 | | | | MD22 | | | | | | | | | | |
| 17 | | | UNIT-5 | MD11 | | | | | | | | | | |
| 18 | | | | MD12 | | | | | | | | | | |
| : | | | : | : | : | : | : | : | | | | | : | : |
| 64 | | | UNIT-16 | MD22 | | | | | | | | | | |

EP 4 775 442 A1

FIG. 21

# FIG. 22

# FIG. 23

(a)

(b)

| 25 | 25 | 25 | 25 | 24 | 25 | 24 | 24 |
| 23 | 24 | 24 | 24 | 24 | 24 | 24 | 24 |
| 25 | 25 | 24 | 24 | 24 | 24 | 24 | 24 |
| 24 | 24 | 23 | 23 | 24 | 24 | 23 | 23 |
| 24 | 24 | 25 | 25 | 23 | 24 | 24 | 25 |
| 23 | 24 | 24 | 24 | 23 | 24 | 24 | 24 |
| 25 | 25 | 25 | 25 | 24 | 25 | 24 | 24 |
| 24 | 24 | 24 | 24 | 24 | 24 | 24 | 23 |

EP 4 775 442 A1

## FIG. 24

| LINE NO. | IN OPERATION | | | | OPERATION HISTORY DATA | | | SOH MEASUREMENT DATA (PRESENT) | | | SOH PREDICTED DATA | | | | | | CLASSIFICATION | CANDIDATE FOR REPLACEMENT OF STORAGE BATTERY (AFTER NEXT MAINTENANCE) | | | | PREDICTED DATA AFTER RECOMBINATION |
| | | | | | | | | | | | TIME FOR NEXT MAINTENANCE | | | TIME FOR MAINTENANCE AFTER THE NEXT MAINTENANCE | | | | | | | | |
| | TRAIN SET | BOX | UNIT | MODULE | OPERATION STARTING DATE | OPERATING PERIOD | DOWNTIME | SOH | STANDARD DEVIATION | DETERMINATION | SOH | STANDARD DEVIATION | DETERMINATION | SOH | STANDARD DEVIATION | DETERMINATION | A/B/C | TRAIN SET | BOX | UNIT | MODULE | SOH | STANDARD DEVIATION |
|---|---|---|---|---|---|---|---|---|---|---|---|---|---|---|---|---|---|---|---|---|---|---|---|
| 1 | | | UNIT -1 | MD11 | 23/1/1 | 0.5 | 0.08 | 96 | | | 88 | | | 70 | | ✕ | C | G1 | A | UNIT -1 | MD11 | 98 | |
| 2 | | | | MD12 | 23/1/1 | 0.5 | 0.08 | 98 | | | 97 | | | 85 | | | B | G1 | A | UNIT -1 | MD12 | 98 | |
| 3 | | | | MD21 | 23/1/1 | 0.5 | 0.08 | 98 | | | 97 | | | 85 | | | B | G1 | A | UNIT -1 | MD21 | 98 | |
| 4 | | | | MD22 | 23/1/1 | 0.5 | 0.08 | 98 | | | 97 | | | 85 | | | B | G1 | A | UNIT -1 | MD22 | 98 | |
| 5 | | | UNIT -2 | MD11 | : | : | : | : | | : | : | | : | : | | : | : | : | : | : | : | : | |
| 6 | | | | MD12 | | | | | | | | | | | | | | | | | | | |
| 7 | | | | MD21 | | | | | | | | | | | | | | | | | | | |
| 8 | | | | MD22 | | | | | | | | | | | | | | | | | | | |
| 9 | | | UNIT -3 | MD11 | | | | | | | | | | | | | | | | | | | |
| 10 | L1 | A | | MD12 | | | | | 2.2 | | | 3.3 | | | 5.0 | | | | | | | | 1.0 |
| 11 | | | | MD21 | | | | | | | | | | | | | | | | | | | |
| 12 | | | | MD22 | | | | | | | | | | | | | | | | | | | |
| 13 | | | UNIT -4 | MD11 | | | | | | | | | | | | | | | | | | | |
| 14 | | | | MD12 | | | | | | | | | | | | | | | | | | | |
| 15 | | | | MD21 | | | | | | | | | | | | | | | | | | | |
| 16 | | | | MD22 | | | | | | | | | | | | | | | | | | | |
| 17 | | | UNIT -5 | MD11 | | | | | | | | | | | | | | | | | | | |
| 18 | | | | MD12 | | | | | | | | | | | | | | | | | | | |
| : | | | : | : | | | | : | | | : | | | | | | | : | | | : | : | |
| 64 | | | UNIT -16 | MD22 | | | | | | | | | | | | | | | | | | | |

EP 4 775 442 A1

# FIG. 25

**R-RANKED PRIORITIZED ARRANGEMENT** — HIGH

**TEMPERATURE DISTRIBUTION IN BOX**

**P-RANKED PRIORITIZED ARRANGEMENT** — LOW

| UNIT-1 | | UNIT-3 | | UNIT-5 | | UNIT-7 | |
|---|---|---|---|---|---|---|---|
| MD11 (R) | MD12 (R) | MD11 (R) | MD12 (R) | MD11 (R) | MD12 (R) | MD11 (R) | MD12 (R) |
| MD21 (Q) | MD22 (Q) | MD21 (Q) | MD22 (Q) | MD21 (Q) | MD22 (Q) | MD21 (Q) | MD22 (Q) |
| MD11 (Q) | MD12 (Q) | MD11 (Q) | MD12 (Q) | MD1 (Q) | MD12 (Q) | MD11 (Q) | MD12 (Q) |
| MD21 (P) | MD22 (P) | MD21 (P) | MD22 (P) | MD21 (P) | MD22 (P) | MD21 (P) | MD22 (P) |
| UNIT-2 | | UNIT-4 | | UNIT-6 | | UNIT-8 | |

**R-RANKED PRIORITIZED ARRANGEMENT** — HIGH

**TEMPERATURE DISTRIBUTION IN BOX**

**P-RANKED PRIORITIZED ARRANGEMENT** — LOW

| UNIT-9 | | UNIT-10 | | UNIT-11 | | UNIT-12 | |
|---|---|---|---|---|---|---|---|
| MD11 (R) | MD12 (R) | MD11 (R) | MD12 (R) | MD11 (R) | MD12 (R) | MD11 (R) | MD12 (R) |
| MD21 (Q) | MD22 (Q) | MD21 (Q) | MD22 (Q) | MD21 (Q) | MD22 (Q) | MD21 (Q) | MD22 (Q) |
| MD11 (Q) | MD12 (Q) | MD11 (Q) | MD12 (Q) | MD1 (Q) | MD12 (Q) | MD11 (Q) | MD12 (Q) |
| MD21 (P) | MD22 (P) | MD21 (P) | MD22 (P) | MD21 (P) | MD22 (P) | MD21 (P) | MD22 (P) |
| UNIT-13 | | UNIT-14 | | UNIT-15 | | UNIT-16 | |

EP 4 775 442 A1

## INTERNATIONAL SEARCH REPORT

| International application No. |
| --- |
| **PCT/JP2024/031301** |

### A. CLASSIFICATION OF SUBJECT MATTER

***B60L 58/16***(2019.01)i; ***B60L 3/00***(2019.01)i; ***B60L 50/60***(2019.01)i; ***B60L 58/18***(2019.01)i; ***H01M 10/42***(2006.01)i; ***H02J 7/00***(2006.01)i

FI: B60L58/16; B60L50/60; B60L58/18; B60L3/00 S; H01M10/42 P; H02J7/00 Y; H02J7/00 P

According to International Patent Classification (IPC) or to both national classification and IPC

### B. FIELDS SEARCHED

Minimum documentation searched (classification system followed by classification symbols)

B60L58/16; B60L3/00; B60L50/60; B60L58/18; H01M10/42; H02J7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2023/149416 A1 (HITACHI, LTD.) 10 August 2023 (2023-08-10)<br>entire text | 1-20 |
| A | JP 2021-164343 A (KABUSHIKI KAISHA TOSHIBA) 11 October 2021 (2021-10-11)<br>entire text | 1-20 |
| A | WO 2021/241764 A1 (HONDA MOTOR CO., LTD.) 02 December 2021 (2021-12-02)<br>paragraphs [0183]-[0193], fig. 5 | 1-20 |
| A | WO 2023/145205 A1 (PANASONIC INTELLECTUAL PROPERTY CORPORATION OF AMERICA) 03 August 2023 (2023-08-03)<br>entire text | 1-20 |
| A | JP 2021-119555 A (HONDA MOTOR CO., LTD.) 12 August 2021 (2021-08-12)<br>entire text | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 775 442 A1**

## INTERNATIONAL SEARCH REPORT

International application No.

**PCT/JP2024/031301**

### C. DOCUMENTS CONSIDERED TO BE RELEVANT

| Category* | Citation of document, with indication, where appropriate, of the relevant passages | Relevant to claim No. |
|---|---|---|
| A | JP 2013-207923 A (SUMITOMONACCO MATERIALS HANDLING CO., LTD.) 07 October 2013 (2013-10-07)<br>paragraphs [0087]-[0089] | 1-20 |
| A | JP 2012-13472 A (HITACHI, LTD.) 19 January 2012 (2012-01-19)<br>entire text | 1-20 |

Form PCT/ISA/210 (second sheet) (July 2022)

48

**INTERNATIONAL SEARCH REPORT**
Information on patent family members

International application No.

**PCT/JP2024/031301**

| Patent document cited in search report | | | Publication date (day/month/year) | Patent family member(s) | | | Publication date (day/month/year) |
|---|---|---|---|---|---|---|---|
| WO | 2023/149416 | A1 | 10 August 2023 | (Family: none) | | | |
| JP | 2021-164343 | A | 11 October 2021 | (Family: none) | | | |
| WO | 2021/241764 | A1 | 02 December 2021 | EP paragraphs [0184]-[0194], fig. 5 | 4160869 | A1 | |
| | | | | US | 2023/0286398 | A1 | |
| | | | | CN | 115699502 | A | |
| WO | 2023/145205 | A1 | 03 August 2023 | EP entire text | 4455702 | A1 | |
| | | | | CN | 118575809 | A | |
| JP | 2021-119555 | A | 12 August 2021 | WO | 2019/181583 | A1 | |
| JP | 2013-207923 | A | 07 October 2013 | (Family: none) | | | |
| JP | 2012-13472 | A | 19 January 2012 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022181680 A

- JP 2014079064 A